# EUROPEAN PATENT APPLICATION

(11) **EP 4 485 879 A1**
(43) Date of publication of application: **01.01.2025**
(21) Application number: 23196611.0
(22) Date of filing: 11.09.2023
(51) Int. Cl.: H04L 41/147, H04L 41/16, H04L 69/40

(54) **DETECTING NETWORK FAILURE USING A MACHINE LEARNING MODEL**

(30) Priority: 28.06.2023 US 202318343360
(71) Applicant: Juniper Networks, Inc., Sunnyvale, CA 94089 (US)
(72) Inventor: KATHARE, Gorakhanath, Sunnyvale, 94089 (US); GUPTA, Manoj, Sunnyvale, 94089 (US)
(74) Representative: D Young & Co LLP

(57) **Abstract**

A network management system for detecting network failure using a machine learning model includes a memory configured to store a machine learning model and processing circuitry in communication with the memory. The processing circuitry is configured to receive network data from a plurality of network devices of an internal network managed by the network management system. The internal network may be connected to an external network isolated from the network management system. Additionally, the processing circuitry is configured apply the machine learning model to detect, based on the network data, a network failure within the external network and perform a corrective action to remediate the network failure within the external network.

## Description

This application claims the benefit of US Application No. 18/343,360, filed 28 June 2023, the entire content of which is incorporated herein by reference.

### TECHNICAL FIELD

The disclosure relates generally to computer networks and, more specifically, to monitoring and troubleshooting computer networks.

### BACKGROUND

Commercial premises or sites, such as offices, hospitals, airports, stadiums, or retail outlets, often install complex wireless network systems, including a network of wireless access points (APs), throughout the premises to provide wireless network services to one or more wireless client devices (or simply, "clients"). APs are physical, electronic devices that enable other devices to wirelessly connect to a wired network using various wireless networking protocols and technologies, such as wireless local area networking protocols conforming to one or more of the Institute of Electrical and Electronics Engineers (IEEE) 802.11 standards (i.e., "WiFi"), Bluetooth / Bluetooth Low Energy (BLE), mesh networking protocols such as ZigBee or other wireless networking technologies.

Many different types of wireless client devices, such as laptop computers, smartphones, tablets, wearable devices, appliances, and Internet of Things (IoT) devices, incorporate wireless communication technology and can be configured to connect to wireless access points when the device is in range of a compatible wireless access point in order to access a wired network. In the case of a client device running a cloud-based application, such as voice over Internet Protocol (VOIP) applications, streaming video applications, gaming applications, or video conference applications, data is exchanged during an application session from the client device through one or more APs and one or more wired network devices, e.g., switches, routers, and/or gateway devices, to reach the cloud-based application server.

### SUMMARY

Particular aspects are set out in the appended independent claims. Various optional embodiments are set out in the dependent claims. In general, this disclosure describes one or more techniques for using a machine learning model to detect one or more network failures in an external network. In some examples, a network management system (NMS) may provide network management services, such as Wide Area Network (WAN) assurance services, for an internal network. The internal network may includes a plurality of network devices that operate to provide WAN interconnectivity between devices of one or more external networks, such as one or more client devices of a customer network with one or more service provider devices of a cloud services provider network. That is, a client device may initiate a session with a service provider device via the plurality of network devices of the internal network. An administrator of the internal network may control a plurality of pathways through the internal network. The pathways may facilitate the flow of network traffic through the internal network. For example, a client device may connect to an access point and initiate a session with a service provider device such as a server of video streaming platform. A pathway through one or more network devices of the internal network may be part of an end-to-end pathway connecting the client device with the service provider device.

When a client device communicates with a service provider device via a network connection within the plurality of network devices of the internal network, one or more network failures may occur outside of the internal network that interrupt a session between the client device and the service provider device. For example, the client device may connect to the network devices of the internal network via one or more access points or other computing devices of an external network. Additionally, or alternatively, the service provider device may connect to the network devices of the internal network via one or more access points or other computing devices of external networks. Network failures may occur at access points, computing devices, or interfaces located in an external network such that even if a network path through one or more network devices of the internal network is fully operational, a session between a client device and a service provider device is interrupted.

For example, a client device may establish a session with a service provider device via an end-to-end pathway that includes a pathway through the internal network. If a network failure located between the internal network and the service provider device occurs during the session, a network device within the internal network may attempt to send network traffic to the service provider device without success. Due to the network failure, the service provider device may not receive the network traffic from the network device of the internal network or may fail to send return network traffic back to the internal network for forwarding to the client device. This means that data indicating transmitted and received network traffic at a network device of the internal network may indicate whether there is a network failure associated with the service provider device. Other kinds of data that may indicate network failure include transmission control protocol (TCP) data indicating a flow of TCP packets at a network device and new session data indicating a number of new sessions established via the network device.

The techniques of this disclosure may provide one or more improvements to the computer-related field of computer networking that are integrated within a practical application. For example, a network management system may use a machine learning model to detect one or more network failures outside of an internal network based on network data received from network devices of the internal network. Since the network data may include information indicating network traffic and new sessions at a network device, the network management system may process network data using the machine learning model to determine whether one or more network devices within the internal network are failing to exchange network traffic or establish new sessions with a device outside of the internal network. By using a machine learning model to detect network failures outside of an internal network, the network management system may detect network failures more accurately as compared with systems that do not analyze network data using a machine learning model.

In one example, a network management system includes a memory configured to store a machine learning model; and processing circuitry in communication with the memory. The processing circuitry is configured to: receive network data from a plurality of network devices of an internal network managed by the network management system, wherein the internal network is connected to an external network isolated from the network management system; apply the machine learning model to detect, based on the network data, a network failure within the external network; and perform a corrective action to remediate the network failure within the external network.

In another example, a method includes receiving, by processing circuitry of a network management system, network data from a plurality of network devices of an internal network managed by the network management system, wherein the internal network is connected to an external network isolated from the network management system, and wherein the processing circuitry is in communication with a memory of the network management system configured to store a machine learning model; applying, by the processing circuitry, the machine learning model to detect, based on the network data, a network failure within the external network; and performing, by the processing circuitry, a corrective action to remediate the network failure within the external network.

In another example, a computer-readable medium comprising instructions that, when executed by processing circuitry, causes the processing circuitry to: receive network data from a plurality of network devices of an internal network managed by a network management system, wherein the internal network is connected to an external network isolated from the network management system; apply a machine learning model to detect, based on the network data, a network failure within the external network; and apply a corrective action to remediate the network failure within the external network.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF DRAWINGS

FIG. 1A is a block diagram of an example network system including a network management system (NMS), in accordance with one or more techniques of the disclosure.
FIG. 1B is a block diagram illustrating further example details of the network system of FIG. 1A, in accordance with one or more techniques of this disclosure.
FIG. 1C is a block diagram illustrating further example details of the network system of FIG. 1A, in accordance with one or more techniques of this disclosure.
FIG. 2 is a block diagram illustrating an example network device, in accordance with one or more techniques of this disclosure.
FIG. 3 is a block diagram of an example NMS, in accordance with one or more techniques of the disclosure.
FIG. 4 shows an example user equipment (UE) device, in accordance with one or more techniques of this disclosure.
FIG. 5 is a block diagram illustrating an example network node, in accordance with one or more techniques of this disclosure.
FIG. 6 is a block diagram of an example AP device, in accordance with one or more techniques of this disclosure.
FIG. 7 is a flow diagram illustrating an example operation for using a machine learning model to detect one or more network failures, in accordance with one or more techniques of this disclosure.
FIG. 8 is a flow diagram illustrating an example operation for training a machine learning model to detect network failures, in accordance with one or more techniques of this disclosure.

### DETAILED DESCRIPTION

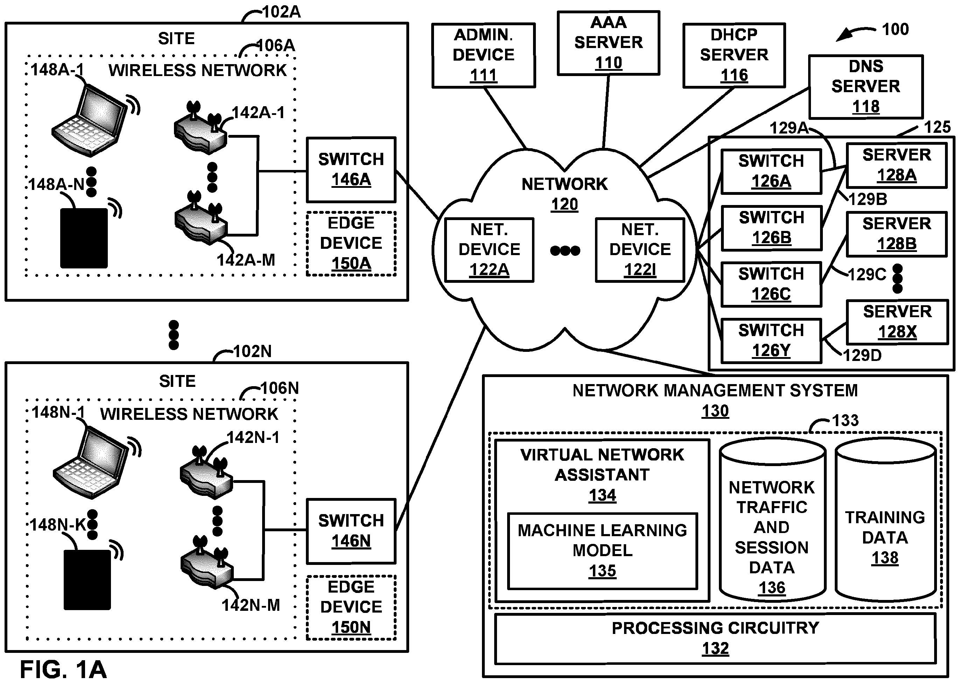

FIG. 1A is a block diagram of an example network system 100 including network management system (NMS) 130, in accordance with one or more techniques of this disclosure. Example network system 100 includes a plurality of sites 102A-102N (collectively, "sites 102") at which a network service provider manages one or more wireless networks 106A-106N (collectively, "wireless networks 106"), respectively. Although in FIG. 1A each site of sites 102 is shown as including a single wireless network of wireless networks 106, respectively, in some examples, each site of sites 102 may include multiple wireless networks, and the disclosure is not limited in this respect.

Each site of sites 102 includes a plurality of network access server (NAS) devices, such as access points (APs), switches, or routers (not shown in FIG. 1A). For example, site 102A includes a plurality of APs 142A-1 through 142A-M. Similarly, site 102N includes a plurality of APs 142N-1 through 142N-M. Each AP 142 may be any type of wireless access point, including, but not limited to, a commercial or enterprise AP, a router, or any other device that is connected to a wired network and is capable of providing wireless network access to client devices within the site.

Each site of sites 102 also includes a plurality of client devices, otherwise known as user equipment devices (LTEs), referred to generally as LTEs or client devices, representing various wireless-enabled devices within each site. For example, a plurality of LTEs 148A-1 through 148A-K are currently located at site 102A. Similarly, a plurality of LTEs 148N-1 through 148N-K are currently located at site 102N. LTEs located at sites 102 may be collectively referred to as "LTEs 148." In some examples, LTEs may be referred to as "client devices." Each LTE of LTEs 148 may be any type of wireless client device, including, but not limited to, a mobile device such as a smart phone, tablet or laptop computer, a personal digital assistant (PDA), a wireless terminal, a smart watch, smart ring, or other wearable device. UEs 148 may also include wired client-side devices, e.g., internet of things (IoT) devices such as printers, security devices, environmental sensors, or any other device connected to the wired network and configured to communicate over one or more wireless networks 106.

In order to provide wireless network services to UEs 148 and/or communicate over the wireless networks 106, APs 142 and the other wired client-side devices at sites 102 are connected, either directly or indirectly, to one or more network devices (e.g., switches, routers, or the like) via physical cables, e.g., Ethernet cables. In the example of FIG. 1A, site 102A includes a switch 146A to which each of APs 142A-1 through 142A-M at site 102A are connected. Similarly, site 102N includes a switch 146N to which each of APs 142N-1 through 142N-M at site 102N are connected. Although illustrated in FIG. 1A as if each site 102 includes a single switch of switches 146 and all APs 142 of the given site 102 are connected to the single switch of switches 146, in other examples, each site 102 may include more or fewer switches and/or routers. In addition, the APs and the other wired client-side devices of the given site may be connected to two or more switches and/or routers. In addition, two or more switches at a site may be connected to each other and/or connected to two or more routers, e.g., via a mesh or partial mesh topology in a hub-and-spoke architecture. In some examples, interconnected switches and routers comprise wired local area networks (LANs) at sites 102 hosting wireless networks 106.

Example network system 100 also includes various networking components for providing networking services within the wired network including, as examples, an Authentication, Authorization and Accounting (AAA) server 110 for authenticating users and/or LTEs 148, a Dynamic Host Configuration Protocol (DHCP) server 116 for dynamically assigning network addresses (e.g., IP addresses) to UEs 148 upon authentication, a Domain Name System (DNS) server 118 for resolving domain names into network addresses, a plurality of switches 126A-126Y (collectively, "switches 126"), a plurality of servers 128A-128X (collectively "servers 128") (e.g., web servers, database servers, file servers, service provider servers, and the like), and NMS 130. In some examples, servers 128 may represent service provider devices that are configured to provide one or more services to LTEs 148. For example, external network 125 may include switches 126 and 128 and may be configured for proving services to sites 102. In some examples, external network 125 is managed by a third party other than NMS 130 or an administrator of NMS 130. As shown in FIG. 1A, the various devices and systems of network system 100 are coupled together via network 120, e.g., the Internet and/or an enterprise intranet. In some examples, network 120 may include network devices 122A-122I (collectively, "network devices 122").

In some examples, network devices 122 may comprise a plurality of network devices that form a plurality of pathways through network 120, which is an internal network. Each pathway of the plurality of pathways through the internal network may be part of one or more end-to-end pathways between LTEs 148 and servers 128. In some examples, an administrator device 111 of network 120 may control a configuration the pathways through network 120. Since the plurality of pathways through the internal network formed by network devices 122 may, in some cases, each be part of one or more end-to-end pathways that connect one or more LTEs of LTEs 148 with one or more servers of servers 128, the administrator of network 120 may control a configuration of the end-to-end pathways by controlling the configuration of the pathways through the internal network. For example, a first pathway through the internal network including network devices 122 may be part of a first end-to-end pathway that connects UE 148A-1 with server 128B and a second pathway through the internal network including network devices 122 may be part of a second end-to-end pathway that connects UE 148N-1 with server 128X. This means that the configuration of the first pathway and the configuration of the second pathway may affect the configuration of the first end-to-end pathway and the configuration of the second end-to-end pathway, respectively.

In the example of FIG. 1A, NMS 130 is a cloud-based computing platform that manages wireless networks 106 at one or more of sites 102. As further described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. In some examples, NMS 130 outputs notifications, such as alerts, alarms, graphical indicators on dashboards, log messages, text / short message service (SMS) messages, email messages, and the like, and/or recommendations regarding wireless network issues to a site or network administrator ("admin") interacting with and/or operating administrator device 111. Additionally, in some examples, NMS 130 operates in response to configuration input received from the administrator interacting with and/or operating administrator device 111.

The administrator and administrator device 111 may comprise IT personnel and an administrator computing device associated with one or more of sites 102. Administrator device 111 may be implemented as any suitable device for presenting output and/or accepting user input. For instance, administrator device 111 may include a display. Administrator device 111 may be a computing system, such as a mobile or non-mobile computing device operated by a user and/or by the administrator. Administrator device 111 may, for example, represent a workstation, a laptop or notebook computer, a desktop computer, a tablet computer, or any other computing device that may be operated by a user and/or present a user interface in accordance with one or more aspects of the present disclosure. Administrator device 111 may be physically separate from and/or in a different location than NMS 130 such that administrator device 111 may communicate with NMS 130 via network 120 or other means of communication.

In some examples, one or more of the NAS devices, e.g., APs 142, switches 146, or routers, may connect to edge devices 150A-150N (collectively, "edge devices 150) via physical cables, e.g., Ethernet cables. Edge devices 150 comprise cloud-managed, wireless LAN controllers. Each of edge devices 150 may comprise an on-premises device at a site 102 that is in communication with NMS 130 to extend certain microservices from NMS 130 to the on-premises NAS devices while using NMS 130 and its distributed software architecture for scalable and resilient operations, management, troubleshooting, and analytics.

Each one of the network devices of network system 100, e.g., servers 110, 116, 118 and/or 128, network devices 122, APs 142, UEs 148, switches 126 and/or 146, and any other servers or devices attached to or forming part of network system 100, may include a system log or an error log module wherein each one of these network devices records the status of the network device including normal operational status and error conditions. Throughout this disclosure, one or more devices of network system 100, e.g., servers 110, 116, 118 and/or 128, switches 126, APs 142, LTEs 148, and switches 146, may be considered "third-party" network devices when owned by and/or associated with a different entity than NMS 130 such that NMS 130 does not receive, collect, or otherwise have access to the recorded status and other data of the third-party network devices. In some examples, edge devices 150 may provide a proxy through which the recorded status and other data of the third-party network devices may be reported to NMS 130. In some examples, one or more devices of network system 100, e.g., servers 110, 116, 118 and/or 128, switches 126, APs 142, UEs 148, and switches 146, may be owned and/or associated with the same entity that is associated with NMS 130. In some examples, network devices 122 may be owned and/or associated with the same entity that is associated with NMS 130.

NMS 130 may include processing circuitry 132 and memory 133. Processing circuitry 132 may include fixed function circuitry and/or programmable processing circuitry. Processing circuitry 132 may include any one or more of a microprocessor, a controller, a digital signal processor (DSP), graphics processing unit (GPU), tensor processing unit (TPU), an application specific integrated circuit (ASIC), a field-programmable gate array (FPGA), or equivalent discrete or analog logic circuitry. In some examples, processing circuitry 132 may include multiple components, such as any combination of one or more microprocessors, one or more controllers, one or more DSPs, GPUs, TPUs, one or more ASICs, or one or more FPGAs, as well as other discrete or integrated logic circuitry, which may be physically located in one or more devices in one or more physical locations.

Processing circuitry 132 may be capable of processing instructions stored in memory 133. In some examples, memory 133 includes a computer-readable medium that includes instructions that, when executed by processing circuitry 132, cause NMS 130 and processing circuitry 132 to perform various functions attributed to them herein. Memory 133 may include any volatile, non-volatile, magnetic, optical, or electrical media, such as a random-access memory (RAM), read-only memory (ROM), non-volatile RAM (NVRAM), electrically erasable programmable ROM (EEPROM), ferroelectric RAM (FRAM), dynamic random-access memory (DRAM), flash memory, or any other digital media.

In computer networking, a "black hole" is a kind of network failure where the network discards, or "drops" incoming or outgoing network traffic along an end-to-end pathway between a source device and a destination device without alerting the source device that the network traffic did not reach its intended recipient. Network failures such as black holes may interrupt a session between a source device and a destination device such that the destination device ceases to provide one or more services associated with the network traffic to the source device. Many factors may contribute to network failures such as black holes including a misconfiguration of one or more forwarding path elements (e.g., next hops) of a network device, a failure of a WAN link, a failure of a server, or a failure of any connection between nodes of the network, as examples.

In some examples, processing circuitry 132 is configured to use virtual network assistant (VNA) 134 and machine learning model 135 to identify one or more network failures occurring outside of the networks managed by NMS 130, such as within external network 125 not managed by NMS 130. Network devices 122 and NMS 130 may be part of the same internal network in that an administrator of the internal network controls both network devices 122 and NMS 130. In some examples, sites 102 including APs 142, switches 146, and UEs 148 are outside of the internal network corresponding to network devices 122 managed by NMS 130. One or more of switches 146 may, in some cases, be within the internal network corresponding to network devices 122 and NMS 130. In some examples, switches 126 and servers 128 may be located outside of the internal network corresponding to network devices 122 and NMS 130. In some examples, one or more of switches 126 may be located within the internal network corresponding to network devices 122 and NMS 130.

An administrator of the internal network may control network devices 122 to form a plurality of network paths that connect one or more UEs 148 with one or more servers 128. Since servers 128 may be configured to provide one or more services to UEs 148, it may be beneficial for network devices 122 to form the plurality of network paths to connect servers 128 with UEs 148. An end-to-end pathway between a UE of UEs 148 and a server of servers 128 may include one or more pathways through the internal network including network devices 122 and one or more pathways through external networks that are isolated from the internal network corresponding to network devices 122 and NMS 130. In the example where sites 102, switches 126A, and servers 128 are located outside of the internal network corresponding to network devices 122 and NMS 130, an end-to-end pathway between UE 148A-1 and server 128A may include one or more pathways through external networks isolated from the internal network and between UE 128A-1 and network devices 122A via APs 142 and switch 146A, a pathway through network devices 122 within the internal network, and one or more pathways outside of the internal network between network devices 122 and server 128A via switches 126 and connections 129.

Although network devices 122 may form the plurality of network paths through network 120 to connect servers 128 with UEs 148, one or more network failures may occur outside of the internal network 120 associated with network devices 122 and NMS 130 that interrupt one or more sessions between servers 128 and LTEs 148 via network devices 122. That is, a network failure may occur in a device, interface, or network connection that is not controlled by the administrator of the internal network associated with network devices 122 and NMS 130. For example, switches 126 and servers 128 may be outside of the internal network associated with network devices 122 and NMS 130. This means that switches 126, servers 128, and connections 129A-129D between switches 126 and servers 128 may be outside of the internal network. Network failures occurring at switches 126, servers 128, or connections 129 may interrupt one or more sessions between servers 128 and UEs 148 via the plurality of network connections formed by network devices 122.

In some examples, processing circuitry 132 of NMS 130 may be configured to apply machine learning model 135 of VNA 134 to identify one or more network failures located outside of the internal network 120 associated with network devices 122 and NMS 130. For example, processing circuitry 132 may apply machine learning model 135 to identify one or more network failures occurring at switches 126, servers 128, connections 129, or any other device or connection outside of the internal network associated with network devices 122 and NMS 130 based on data received from within the internal network 120. By applying machine learning model 135 to identify network failures occurring outside of the internal network 120 based on data received from inside the internal network 120, NMS 130 may improve a manner in which network devices 122 facilitate sessions between servers 128 and UEs 148 as compared with network systems that do not use a machine learning model to identify network failures outside of the internal network.

NMS 130 may leverage machine learning model and network features to detect network failures such as black holes and remediate or avoid a detected network failure. An example feature may relay to customers what routing of a packet looks like, e.g., how the packet is flowing, next hop, services, etc. Using machine learning model 135 may improve a speed and/or an accuracy at which NMS 130 detects one or more network failures as compared with systems that do not use a machine learning model to detect network failures. For example, systems that use heartbeat mechanisms to detect network failures might not detect network failures as quickly or as accurately or to as high a degree of confidence as NMS 130 detects network failures using machine learning model 135. This is because machine learning model 135 may detect network failures by analyzing traffic and session data 136 received from network devices 122 which includes significantly more data that merely heartbeat signals. Furthermore, machine learning model 135 may be trained using a large cache of training data 138 so that machine learning model 135 is configured to recognize a plurality of network data patterns associated with network failure and/or a plurality of network data patterns associated with healthy network operation.

To apply machine learning model 135 to detect a network failure, processing circuitry 132 may be configured to determine that one or more network devices of network devices 122 are unable to exchange network traffic with a server of servers 128 located outside of the internal network. For example, processing circuitry 132 may apply machine learning model 135 to determine that network device 122I is unable to communicate with server 128A via switch 126A and connection 129A. When network device 122I is not able to communicate with server 128A, this means that there may be a network failure corresponding to switch 126A, server 128A, connection 129A, or any combination thereof. In some examples, processing circuitry 132 may be configured to apply machine learning model 135 to identify a location of a network failure outside of the internal network. For example, machine learning model 135 may output information indicating that the network failure is present at connection 129A, switch 126A, or another location. In some examples, when NMS 130 applies machine learning model 135 to detect a network failure, the machine learning model 135 may output a detected network failure with a confidence score indicating a confidence that the machine learning model 135 accurately detected the network failure.

A network failure located outside of the internal network may, in some examples, be located along one or more pathways through external networks that are part of one or more end-to-end pathways that also include an pathway through the internal network including network devices 122. That is, network traffic may travel through a pathway of the internal network including network devices 122 to an pathway through an external network that includes a network failure which prevents the network traffic from traversing an end-to-end pathway that includes both the internal network pathway and the external network pathway. Even though an administrator of the internal network corresponding to network devices 122 and NMS 130 might have control over network devices 122 and the internal network pathways without having control over the external network pathways, it might be possible for the administrator to reroute network traffic through network devices 122 to avoid a network failure within an external network pathway and/or reconfigure internal network pathways so that the network traffic avoids the network failure within the external network pathway. NMS 130 is not limited to rerouting network traffic in response to detecting a network failure. In some examples, NMS 130 may, in response to detecting a network failure, control network devices 122 to avoid the forwarding of network traffic to an address associated with the network failure, withdraw a route to an address associated with the network failure, send a diagnostic message to an address associated with the network failure to confirm the network failure within the external network, output an indication or notification of the network failure to an administrator, or any combination thereof.

In some examples, it may be beneficial to reroute network traffic to server 128A or another server via an external network pathway that does not have network failure. For example, when processing circuitry 132 applies machine learning model 135 to determine that there is a network failure at connection 129A which prevents network device 122A from communicating with server 128A, processing circuitry 132 may route network traffic from network device 122I to server 128A via switch 126B and connection 129B instead of routing network traffic via switch 125A and connection 129A. In another example, the same service provider may provide at least some of the same services to UEs 148 using both server 128A and server 128B. In this example, based on determining that there is a network failure at connection 129A, processing circuitry 132 may route network traffic from network device 122I to server 128B via switch 126C and connection 129C instead of routing network traffic to server 128A via switch 125A and connection 129A. In any case, based on applying machine learning model 135 to identify one or more network failures located outside of the internal network, NMS 130 may control network devices 122 to reroute traffic to avoid network failures outside of the internal network without interrupting one or more sessions between UEs 148 and servers 128A or decreasing interruptions of one or more sessions between UEs 148 and servers 128A.

Rerouting network traffic is not the only remedial action that NMS 130 is configured to take in response to identifying one or more network failures. In some examples, NMS 130 may output one or more messages in response to identifying one or more network failures. For example, when NMS 130 identifies a network failure associated with server 128A, NMS 130 may output a message (e.g., a ping) to server 128A and/or a service provider associated with server 128A indicating that NMS 130 detected a network failure. In some examples, NMS 130 may save information indicating the detected network failure to memory 133.

In some examples, NMS 130 receives network traffic and session data 136 from network devices 122. In some examples, the term "network traffic and session data" may be referred to herein as "network data." Network traffic and session data 136 may, in some examples, include network traffic and session data corresponding to each network device of network devices 122. In some examples, the network traffic and session data corresponding to each network device of network devices 122 may include network traffic transmission (Tₓ) data indicating an amount of network traffic transmitted from an interface of the network device and network traffic reception (Rₓ) data indicating an amount of network traffic received by the network interface of the network device. Additionally, or alternatively, the network traffic and session data corresponding to each network device of network devices 122 may include transmission control protocol (TCP) data indicating an amount of TCP synchronize (SYN) network traffic received by and/or transmitted from the network device, an amount of TCP synchronize-acknowledge (SYN-ACK) network traffic received by and/or transmitted from the network device, and an amount of TCP acknowledge (ACK) network traffic received by and/or transmitted from the network device. Additionally, or alternatively, the network traffic and session data corresponding to each network device of network devices 122 may include new session data indicating a number of new sessions established via the interface of the network device, or any combination thereof.

If any internet protocol (IP) address within network system 100 is unreachable, this may cause a change in network traffic transmission data, network traffic reception data, TCP data, new session data, or any combination thereof. For example, when Tₓ data is increasing and Rₓ data is decreasing or nonexistent with respect to a device associated with the IP address, this may indicate one or more network failures corresponding to the device. In another example, when there is an increase in one or more TCP resets with respect to a device associated with the IP address, this may indicate one or more network failures corresponding to the device. In some examples, one or more failures to establish a new session involving a device associated with the IP address may indicate one or more network failures corresponding to the device.

In some examples, all of the edge routers within an internal network corresponding to network devices 122 and NMS 130 use the same gateway IP address to reach a destination device (e.g., a server of servers 128). When machine learning model 135 determines that a connection, device, or server outside of the internal network is associated with a network failure, NMS 130 may notify devices within the internal network to stop using the connection, device, or server associated with the IP address to communicate with a destination device. In some examples, NMS 130 may reroute network traffic to the destination device via another external network pathway that is not associated with an identified network failure. In some examples, NMS 130 may reroute network traffic to another server that is configured to provide the same or similar services as the destination device associated with the network failure.

In some examples, the network traffic and session data received from a network device of network devices 122 may be organized according to a respective server of servers 128 associated with the data. For example, network traffic and session data received from network device 122I may include a set of data including Tₓ data indicating an amount of network traffic transmitted from an interface of network device 122I to server 128A and Rₓ data indicating an amount of network traffic received by network device 122I from server 128A. Additionally, or alternatively, network traffic and session data received from network device 122I may include TCP data indicating a number of TCP SYN packets sent by network device 122I to server 128A, a number of TCP SYN-ACK packets received by network device 122I from server 128A, a number of TCP ACK packets sent by network device 122I to server 128A, or any combination thereof. In some examples, network traffic and session data received from network device 122I may include new session data indicating a number of new sessions established with server 128A via network device 122A according to any communication session protocol including TCP, UDP, TLS, ICMP, or any combination thereof.

Since network traffic and session data 136 may include a variety of data including data indicating levels of network traffic and amounts of new sessions, network traffic and session data 136 indicating a manner and extent to which each network device of network devices 122 communicates with each server of servers 128 via each end-to-end pathway of a plurality of end-to-end pathways between servers 128 and UEs 148 via network devices 122. In some examples, network devices 122 and NMS 130 may be located within the same internal network and the plurality of internal network pathways through network devices 122 may interface with a plurality of external network pathways outside of the internal network to form a plurality of end-to-end pathways between servers 128 and UEs 148. That is, an end-to-end pathway between a server of servers 128 and a UE of LTEs 148 may include one or more internal network pathways through network devices 122 and one or more external network pathways outside of the internal network.

To apply machine learning model 135, processing circuitry 132 of NMS 130 may use network traffic and session data 136 as an input to machine learning model 135 and machine learning model 135 may generate an output based on network traffic and session data 136 that indicates one or more network failures outside of the internal network corresponding to network devices 122 and NMS 130. That is, machine learning model 135 may identify one or more network failures outside of the internal network based on data received from network devices 122 located within the internal network.

Machine learning model 135 may, in some cases, identify a network failure based on one or more trends in network traffic and session data 136. For example, when a trend in the Tₓ data and the Rₓ data of the network traffic and session data 136 indicates high levels of network traffic transmission from one or more of network devices 122 to server 128B and low levels of network traffic reception by the one or more of network devices 122 from server 128B, this may indicate that there is a network failure between the one or more of network devices 122 and server 128B. In another example, when a trend in the TCP data of network traffic and session data 136 indicates high levels of TCP SYN messages transmitted to server 128B and low levels of TCP SYN-ACK messages received from server 128B, this may indicate that a TCP session between network devices 122 and server 128B failed to establish, which may indicate a network failure. In another example, when a trend in the new session data of network traffic and session data 136 indicates a low number of new sessions established between server 128B and UEs 148 via network devices 122 of the internal network, this may indicate that there is a network failure between network devices 122 and server 128B.

In some examples, machine learning model 135 may detect one or more network failures that are likely to occur at a future time based on network traffic and session data 136. For example, machine learning model 135 may determine that a probability that network failure will occur at connection 129A is greater than a probability threshold. NMS 130 may reroute network traffic based on determining that the probability that network failure will occur at connection 129A is greater than the probability threshold.

Memory 133 of NMS 130 may be configured to store training data 138. In some examples, training data 138 comprises a plurality of sets of training network data. In some examples, each set of training network data of the plurality of sets of training network data may include data similar in kind to the network traffic and session data 136 received from network devices 122. For example, each set of training network data of the plurality of sets of training network data may include network traffic transmission data, network traffic reception data, TCP data, new session data, or any combination thereof corresponding to a network device. In some examples, each set of training network data of the plurality of sets of training network data is associated with network status information indicating whether the set of training network data is associated with one or more network failure events.

Processing circuitry 132 of NMS 130 may be configured to train, using supervised learning, machine learning model 135 based on the plurality of sets of training network data and the network status information corresponding to each set of training network data of the plurality of sets of training network data. In some examples, to train machine learning model 135, processing circuitry 132 may train machine learning model 135 to recognize one or more patterns in the training data that are associated with network failure and/or one or more patterns in the training data that are not associated with network failure.

NMS 130 may train machine learning model 135 using historical data of route parameters on network device interfaces (e.g., gateway routers and/or destination IP addresses) at an internal network-level in order to determine baseline or average levels one or more route parameters (e.g., Rₓ data, Tₓ data, TCP data, and new session data) for the internal network. In some examples, NMS 130 may train machine learning model 135 to identify spikes in route parameters as compared with baseline levels that are indicative of network failures including black holes. This means that machine learning model 135 may leverage patterns associated with network failures that machine learning model 135 learns when trained with training data 138 to identify network failures. For example, to learn a pattern corresponding to network failures such as black holes, machine learning model 135 may analyze average uplink and downlink at one or more points in time, analyze new session data, analyze TCP resets, or any combination thereof.

Processing circuitry 132 may, in some examples, receive information indicating whether the machine learning model 135 accurately detected a network failure based on network traffic and session data 136. Processing circuitry 132 may augment the training data 138 with the network data and network status information indicating whether machine learning model 135 accurately detected the network failure based on the network traffic and session data 136. In some cases, processing circuitry 132 may re-train, using supervised learning, the machine learning model 135 based on the augmented training data. That is, processing circuitry 132 may continuously re-train machine learning model 135 based on predictions and determinations that machine learning model 135 makes.

In accordance with one specific implementation, a computing device is part of NMS 130. In accordance with other implementations, NMS 130 may comprise one or more computing devices, dedicated servers, virtual machines, containers, services, or other forms of environments for performing the techniques described herein. Similarly, computational resources and components implementing VNA 134 may be part of the NMS 130, may execute on other servers or execution environments, or may be distributed to nodes within network 120 (e.g., routers, switches, controllers, gateways, and the like).

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network system 100, and may or may not form a part of NMS 130.

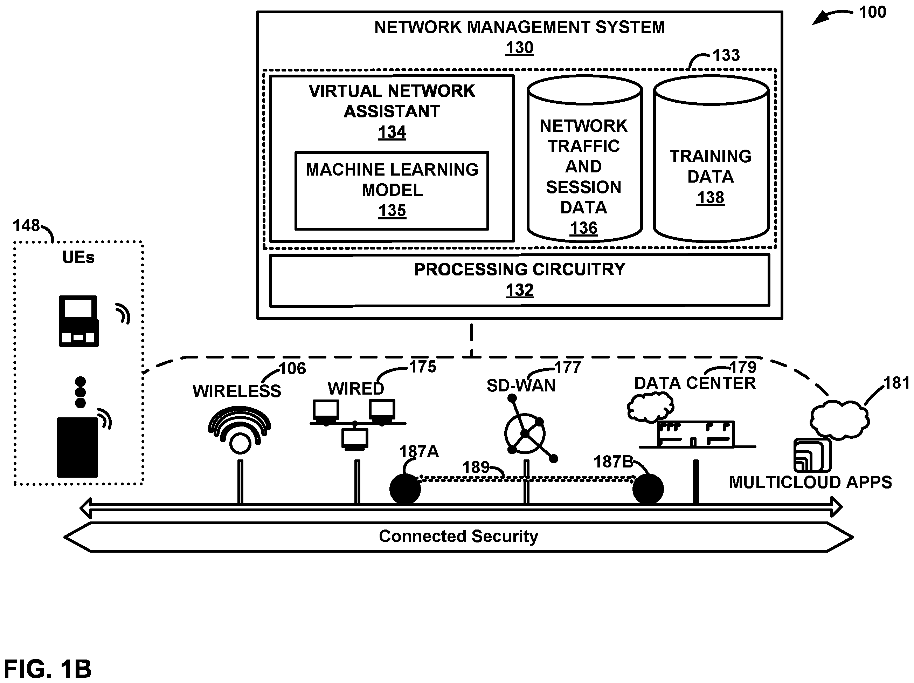

FIG. 1B is a block diagram illustrating further example details of the network system 100 of FIG. 1A, in accordance with one or more techniques of this disclosure. In this example, FIG. 1B illustrates NMS 130 configured to operate according to an artificial intelligence / machine-learning-based computing platform providing comprehensive automation, insight, and assurance (Wi-Fi Assurance, Wired Assurance and wide area network (WAN) assurance) spanning from "client," e.g., LTEs 148 connected to wireless networks 106 and wired LANs 175 (far left of FIG. 1B), to "cloud," e.g., cloud-based application services 181 that may be hosted by computing resources within data centers 179 (far right of FIG. 1B). In some examples, wired LAN 174 may be an example of a wired connection between one or more APs and a switch of a site of sites 102 (e.g., APs 142A and switch 146A of FIG. 1A. In some examples, data center 179 may include one or more switches of switches 126 of FIG. 1A and/or one or more servers of servers 128 of FIG. 1A. Cloud-based application services 181 may represent services provided by one or more service providers corresponding to servers 128 of FIG. 1A.

As described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. For example, NMS 130 may be configured to proactively monitor and adaptively configure network system 100 so as to provide self-driving capabilities. Moreover, VNA 134 includes a natural language processing engine to provide AI-driven support and troubleshooting, anomaly detection, artificial intelligence (AI)-driven location services, and AI-driven radio frequency (RF) optimization with reinforcement learning. For example, VNA 134 includes a machine learning model 135 configured to identify one or more network failures based on network traffic and session data 136 stored in memory 133 of NMS 130. In some examples, processing circuitry 132 may train machine learning model 135 using training data 138

As illustrated in the example of FIG. 1B, NMS 130 also provides configuration management, monitoring and automated oversight of software defined wide-area network (SD-WAN) 177, which operates as an intermediate network communicatively coupling wireless networks 106 and wired LANs 175 to data centers 179 and cloud-based application services 181. In general, SD-WAN 177 provides seamless, secure, traffic-engineered connectivity between "spoke" routers 187A of wired LANs 175 hosting wireless networks 106, such as branch or campus networks, to "hub" routers 187B further up the cloud stack toward cloud-based application services 181. SD-WAN 177 often operates and manages an overlay network on an underlying physical WAN, which provides connectivity to geographically separate customer networks. In other words, SD-WAN 177 extends Software-Defined Networking (SDN) capabilities to a WAN and allows network(s) to decouple underlying physical network infrastructure from virtualized network infrastructure and applications such that the networks may be configured and managed in a flexible and scalable manner.

In some examples, underlying routers of SD-WAN 177 may implement a stateful, session-based routing scheme in which the routers 187A, 187B dynamically modify contents of original packet headers sourced by UEs 148 to steer traffic along selected paths, e.g., path 189, toward application services 181 without requiring use of tunnels and/or additional labels. In this way, routers 187A, 187B may be more efficient and scalable for large networks since the use of tunnel-less, session-based routing may enable routers 187A, 187B to achieve considerable network resources by obviating the need to perform encapsulation and decapsulation at tunnel endpoints. Moreover, in some examples, each router 187A, 187B may independently perform path selection and traffic engineering to control packet flows associated with each session without requiring use of a centralized SDN controller for path selection and label distribution. In some examples, routers 187A, 187B implement session-based routing as Secure Vector Routing (SVR), provided by Juniper Networks, Inc.

In some examples, SD-WAN 177 including routers 187A, 187B and path 189 may be an example of network devices 122 of FIG. 1A. SD-WAN 177 may include a plurality of routers including routers 187A, 187B and a plurality of paths including path 189. That is, path 189 may be one example of a path through SD-WAN 177. In some examples, NMS 130, SD-WAN 177, the plurality of routers including routers 187A, 187B, and the plurality of paths including path 189 may be part of an internal network managed by an administrator. For example, an administer may control the plurality of routers including routers 187A, 187B and configure the plurality of paths including path 189 to connect UEs 148 with cloud-based application services 181 via SD-WAN 177. In some examples, one or more other devices may be located outside of the internal network corresponding to NMS 130, SD-WAN 177, the plurality of routers including routers 187A, 187B, and the plurality of paths including path 189. For example, UEs 148, wireless networks 106, wired LANs 175, Data center 179, and cloud-based application services 181 may be located outside of the internal network.

In some examples, NMS 130 may enable intent-based configuration and management of network system 100, including enabling construction, presentation, and execution of intent-driven workflows for configuring and managing devices associated with wireless networks 106, wired LANs 175, and/or SD-WAN 177. For example, declarative requirements express a desired configuration of network components without specifying an exact native device configuration and control flow. By utilizing declarative requirements, what should be accomplished may be specified rather than how it should be accomplished. Declarative requirements may be contrasted with imperative instructions that describe the exact device configuration syntax and control flow to achieve the configuration. By utilizing declarative requirements rather than imperative instructions, a user and/or user system is relieved of the burden of determining the exact device configurations required to achieve a desired result of the user/system. For example, it is often difficult and burdensome to specify and manage exact imperative instructions to configure each device of a network when various different types of devices from different vendors are utilized. The types and kinds of devices of the network may dynamically change as new devices are added and device failures occur. Managing various different types of devices from different vendors with different configuration protocols, syntax, and software versions to configure a cohesive network of devices is often difficult to achieve. Thus, by only requiring a user/system to specify declarative requirements that specify a desired result applicable across various different types of devices, management and configuration of the network devices becomes more efficient.

Typically, NMS 130 may provide network management services, such as management, monitoring and automated oversight services, for SD-WAN 177, based on network data received from the components of SD-WAN 177, such as routers 187. Conventionally, an NMS may not receive network data for external or third-party networks, such as from a cloud-service provider network supporting cloud-based application services 181. Therefore, a conventional NMS may not have insight into the causes of network failures within such an external network, and therefore have limited ability to remediate failures occurring within such external networks that adversely affect the forwarding of traffic within SD-WAN 177, such as the blackholing of customer traffic occurring within such external networks.

In accordance with the techniques described in this disclosure, NMS 130 is configured to receive network traffic and session data 136 from the plurality of routers including routers 187A, 187B. In some examples, network traffic and session data 136 may include sets of data from each of the plurality of routers including routers 187A, 187B within SD WAN 177. Processing circuitry 132 may apply machine learning model 135 of VNA 134 to identify one or more network failures occurring outside of SD-WAN 177, such as within a network supporting cloud-based application services 181, based on network traffic and session data 136 received from the plurality of routers including routers 187A, 187B within the internal network. Processing circuitry 132 of NMS 138 may be configured to train machine learning model 135 based on training data 138.

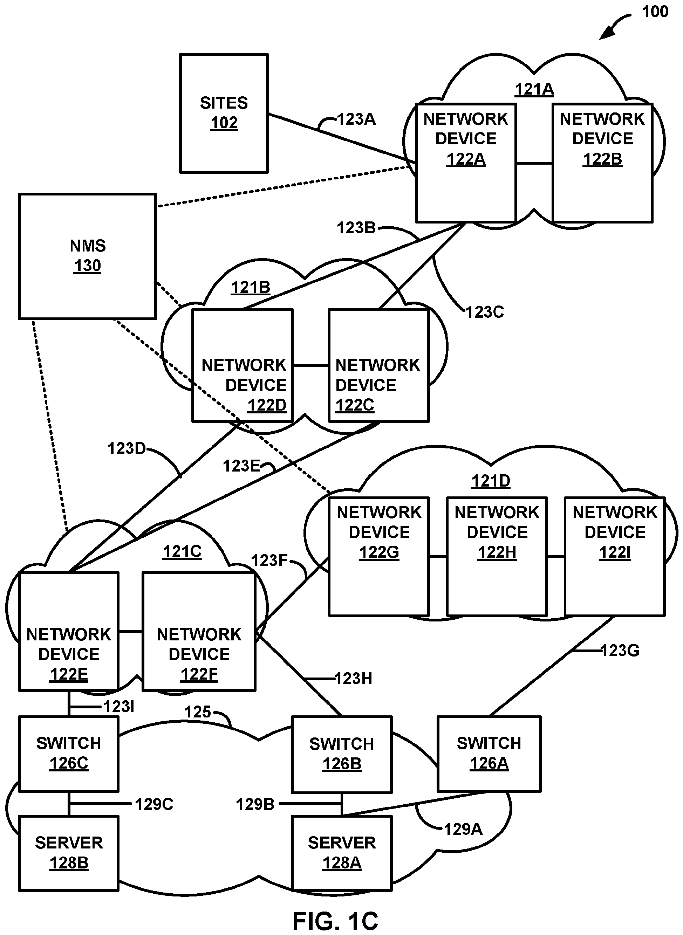

FIG. 1C is a block diagram illustrating further example details of the network system 100 of FIG. 1A, in accordance with one or more techniques of this disclosure. As seen in FIG. 1C, network system 100 includes networks 121A-121D (collectively, "networks 121") configured to provide WAN connectivity to sites 102. In some examples, networks 121 may be an example of network 120 of FIG. 1A. Network devices 122 of networks 121 provide sites 102 with access to networks 121. Network system 100 includes a set of connections 123A-123I (collectively, "connections 123"). Each connection of connections 123 may connect a network device of network devices 122 with another network device of network devices 122 or with another device outside of network devices 122. Network devices 122 of networks 121 may provide sites 102 with access to one or more services from service providers associated with servers 128 including server 128A and server 128B. As seen in FIG. 1C, server 128A is connected to network device 122I via connection 123G, switch 126A, and connection 129A and server 128A is connected to network device 122F via connection 123H, switch 126B, and connection 129B. Server 128B is connected to network device 122E via connection 1231, switch 126C, and connection 129C.

Network 121A is depicted as having two network devices, network 121B is depicted as having two network devices, network 121C is depicted as having two network devices, and network 121D is depicted as having three network devices for ease of illustration, but each of networks 121 may include any number of network devices. The configuration of sites 102, network devices 122, switches 126, and servers 128 illustrated in FIG. 1C is one example configuration, but the techniques of this disclosure are not limited to the configuration illustrated in FIG. 1C. For example, another example of network 121B may include three network devices connected between network device 122 and network device 122E instead of the two network devices illustrated in FIG. 1C.

Connections 123 may form a plurality of internal network pathways through network devices 122. For example, one internal network pathway exists between sites 102 and switch 126A via connection 123A, network device 122A, connection 123B, network device 122D, connection 123D, network device 122E, network device 122F, connection 123F, network device 122G, network device 122H, network device 122I, and connection 123G. Another internal network pathway exists between sites 102 and switch 126C via connection 123A, network device 122A, connection 123C, network device 122C, connection 123E, network device 122E, and connection 1231. As seen in FIG. 1C, there are many possible internal network pathways through network devices 122.

In some examples, internal network pathways through network devices 122 via connections 123 may be located within an internal network corresponding to network devices 122 and NMS 130. That is, an administrator of internal networks 121 (or NMS 130) may configure network devices 122 and the internal network pathways through network devices 122 via connections 123. When one or more network failures happen at network devices 122 and/or connections 123, the administrator of internal networks 121 (or NMS 130) may resolve these network failures by controlling network devices 122 and/or connections 123. When one or more network failures occur outside of internal networks 121 (such as behind switches 126 with respect to network devices 122), it may be beneficial for NMS 130 to detect these failures and reroute network traffic through network devices 122 to avoid network failures outside of the internal network. This is because the administrator (or NMS 130) of internal networks 121 and network devices 122 might not have control over one or more devices or connections that are a source of a network failure outside of the internal network, but the administrator does have control over network traffic traveling through internal networks 121.

In some examples, sites 102, switches 126, servers 128, and connections 129 may be located outside of the internal network corresponding to network devices 122 and NMS 130. Sites 102, switches 126, servers 128, and connections 129 may, in some examples, form a plurality of external network pathways that, together with the internal network pathways through network devices 122, form a plurality of end-to-end pathways between UEs 148 and servers 128. For example, an end-to-end pathway between UE 148A-1 and server 128B may include an external network pathway extending from UE 148A-1 to network devices 122 via APs 142 and switch 146A, an internal network pathway through network devices 122 via connection 123A, network device 122A, connection 123C, network device 122C, connection 123E, network device 122E, connection 123I, switch 126C, and connection 129C. There are many other examples of end-to-end pathways that connect sites 102 and servers 128 as illustrated in FIG. 1C.

NMS 130 may apply machine learning model 135 of FIGS. 1A-1B to identify one or more network failures located outside of internal networks 121. For example, machine learning model 135 may determine that there is a network failure in external network 125 at connection 129A between switch 126A and server 128A that is interrupting one or more sessions between server 128A and sites 102 via network devices 122. Based on determining that there is a network failure at connection 129A, NMS 130 may re-route traffic to server 128A via switch 126B and connection 129B. In other words, since the network failure at connection 129B prevents server 128A from exchanging network traffic over connection 129A, NMS 130 may instead route traffic to server 128A via connection 123H, switch 126B and connection 129B. In another example, server 128A and server 128B may be associated with the same service provider. In this example, NMS 130 may re-route traffic to server 128B via connection 123I, switch 126C and connection 129C based on determining that there is a network failure at connection 129A.

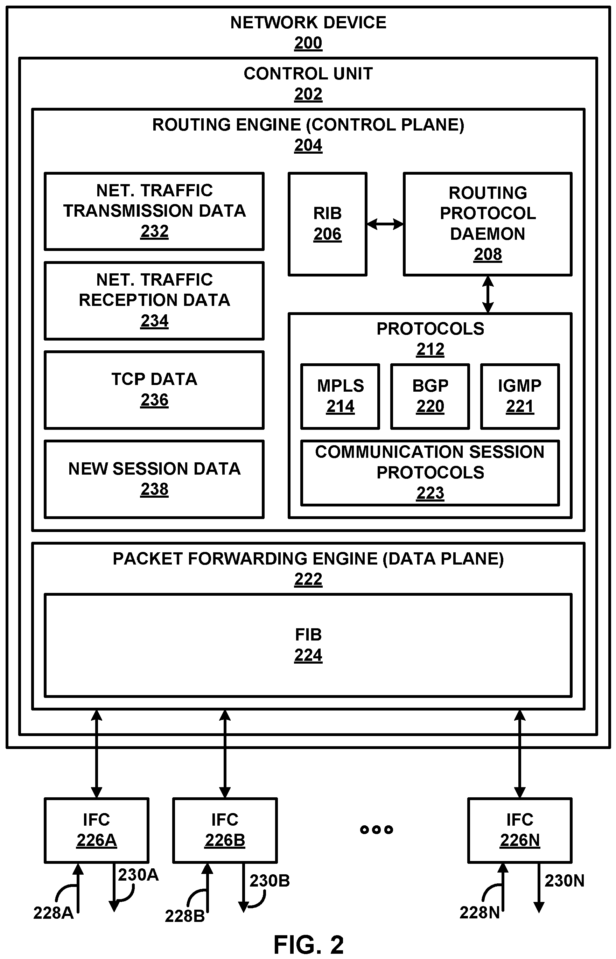

FIG. 2 is a block diagram illustrating an example network device 200, in accordance with one or more techniques of this disclosure. In general, network device 200 may be an example of one of network devices 122 of FIGS. 1A and 1C or one of routers 187A, 187B of FIG. 1B. In this example, network device 200 includes interface cards 226A-226N ("IFCs 226") that receive packets via incoming links 228A-228N ("incoming links 228") and send packets via outbound links 230A-230N ("outbound links 230"). IFCs 226 are typically coupled to links 228, 230 via a number of interface ports. Network device 200 also includes a control unit 202 that determines routes of received packets and forwards the packets accordingly via IFCs 226.

Control unit 202 may comprise routing engine 204 and packet forwarding engine 222. Routing engine 204 operates as the control plane for network device 200 and includes an operating system that provides a multi-tasking operating environment for execution of a number of concurrent processes. Routing engine 204 communicates with other routers, e.g., such as network devices 122 of FIGS. 1A and 1C, to establish and maintain a computer network, such as network system 100 of FIGS. 1A-1C, for transporting network traffic between one or more customer devices. Routing protocol daemon (RPD) 208 of routing engine 204 executes software instructions to implement one or more control plane networking protocols 212. For example, protocols 212 may include one or more routing protocols, such as Multiprotocol Label Switching (MPLS) protocol 214, Border Gateway Protocol (BGP) 220, Internet Group Management Protocol (IGMP) 221, for exchanging routing information with other routing devices and for updating routing information base (RIB) 206, and other routing protocols. Protocols 212 may further include one or more communication session protocols 223, such as TCP, user datagram protocol (UDP), transport layer security (TLS), or internet control message protocol (ICMP).

RIB 206 may describe a topology of the computer network in which network device 200 resides, and may also include routes through the shared trees in the computer network. RIB 206 describes various routes within the computer network, and the appropriate next hops for each route, i.e., the neighboring routing devices along each of the routes. Routing engine 204 analyzes information stored in RIB 206 and generates forwarding information for packet forwarding engine 222, stored in Forwarding information base (FIB) 224. FIB 224 may associate, for example, network destinations with specific next hops and corresponding IFCs 226 and physical output ports for output links 230. FIB 224 may be a radix tree programmed into dedicated forwarding chips, a series of tables, a complex database, a link list, a radix tree, a database, a flat file, or various other data structures.

FIB 224 may also include lookup structures. Lookup structures may, given a key, such as an address, provide one or more values. In some examples, the one or more values may be one or more next hops. A next hop may be implemented as microcode, which when executed, performs one or more operations. One or more next hops may be "chained," such that a set of chained next hops perform a set of operations for respective different next hops when executed. Examples of such operations may include applying one or more services to a packet, dropping a packet, and/or forwarding a packet using an interface and/or interface identified by the one or more next hops.

Network traffic transmission data 232 may include information corresponding to an amount of network traffic that network device 200 forwards corresponding to each endpoint device of a set of endpoint devices. For example, network traffic transmission data 232 may include information corresponding to an amount of network traffic that network device 200 forwards along one or more end-to-end pathways where server 128A of FIG. 1A is an endpoint device, information corresponding to an amount of network traffic that network device 200 forwards along one or more end-to-end pathways where server 128B of FIG. 1A is an endpoint device, and so on. In some examples, the amount of network traffic indicated by network traffic transmission data 232 may indicate a total number of packets, a rate at which packets are sent, a number of packets transmitted over a period of time, or any combination thereof.

Network traffic reception data 234 may include information corresponding to an amount of network traffic that network device 200 receives from each endpoint device of a set of endpoint devices. For example, network traffic reception data 234 may include information corresponding to an amount of network traffic that network device 200 receives from server 128A along one or more end-to-end pathways where server 128A of FIG. 1A is an endpoint device, information corresponding to an amount of network traffic that network device 200 receives from server 128B along one or more end-to-end pathways where server 128B of FIG. 1A is an endpoint device, and so on. In some examples, the amount of network traffic indicated by network traffic reception data 234 may indicate a total number of packets, a rate at which packets are received, a number of packets received over a period of time, or any combination thereof.

Network traffic transmission data 232 and network traffic reception data 234 may indicate one or more network failures associated with one or more endpoint devices of a set of endpoint devices. For example, if network traffic transmission data 232 indicates that a high volume of network traffic is forwarded along one or more end-to-end pathways associated with an endpoint device, and network traffic reception data 234 indicates that a low volume or no volume of network traffic is received from the endpoint device along the one or more end-to-end pathways, this may indicate that a network failure associated with the endpoint device is preventing network traffic from reaching the endpoint device and/or preventing the endpoint device to send network traffic along the one or more end-to-end pathways.

In some examples, to establish a session between a client device (e.g., one of LTEs 148 of FIG. 1A) and a service provider device (e.g., one of servers 128 of FIG. 1A) according to TCP, the client device and the service provider device may engage in a three-way handshake. For example, the client device may send a SYN packet to the service provider device via an end-to-end pathway between the client device and the service provider device. Upon receiving the SYN packet, the service provider device may send a SYN-ACK packet to the client device via the end-to-end pathway in response to the SYN packet. When the client device receives the SYN-ACK packet, the client device may send an ACK packet to the service provider device via the end-to-end pathway, completing the three-way handshake and establishing the session according to TCP.

TCP data 236 may include information indicating a number of TCP SYN packets forwarded via network device 200 along one or more end-to-end pathways associated with an endpoint device, a number of TCP SYN-ACK packets forwarded via network device 200 along one or more end-to-end pathways associated with the endpoint device, a number of TCP ACK packets forwarded via network device 200 along one or more end-to-end pathways associated with the endpoint device, or any combination thereof. TCP data 236 may include TCP data corresponding to each endpoint device of a plurality of endpoint devices (e.g., each server of servers 128A-128X of FIG. 1A). That is, TCP data 236 may indicate whether, for each endpoint device of a plurality of endpoint devices, TCP three-way handshakes are successfully completed or not successfully completed.

When one or more TCP handshakes involving an endpoint device are not successfully completed, this may indicate that there is a network failure corresponding to the endpoint device. For example, when network device 200 forwards a high volume of TCP SYN packets along one or more end-to-end pathways to server 128A via connection 123G, switch 126A, and connection 129A of FIG. 1C and receives a low volume or no volume of TCP SYN-ACK packets from server 128A along the one or more end-to-end pathways via connection 129A, switch 126A, and connection 123G of FIG. 1C, this may indicate that a network failure exists in switch 126A, connection 129A, and/or server 128A. This is because switch 126A, connection 129A, and server 128A represent a portion of the one or more end-to-end pathways between server 128A and UEs 148 that is outside of the internal network corresponding to network device 200.

New session data 238 may indicate a number of new sessions that failed to establish between each service provider device of a plurality of service provider devices (e.g., each server of servers 128) and one or more of a plurality of client devices (e.g., LTEs 148) via network device 200. As used herein, the term "new session" may refer to a new session according to TCP and/or a new session according to one or more other communication session protocols (e.g., UDP, TLS, and ICMP). For example, new session data 238 may indicate a number of new sessions failed to establish between server 128A and one or more of UEs 148 via network device 200, a number of new sessions created between server 128B and one or more of LTEs 148 via network device 200, and so on. A "number" of new sessions failed to establish may refer to a total number of new sessions failed to establish, a rate at which new sessions are failed to establish, a number of new sessions failed to establish within a period of time, or any combination thereof. In some examples, New session data 238 may indicate a number of new sessions established between each service provider device of a plurality of service provider devices (e.g., each server of servers 128) and one or more of a plurality of client devices (e.g., UEs 148) via network device 200.

Network device 200 may output network traffic transmission data 232, network traffic reception data 234, TCP data 236, new session data 238, or any combination thereof to a network management system (e.g., NMS 130 of FIGS. 1A-1C) within an internal network corresponding to network device 200. In some examples, network device 200 may continuously output network traffic transmission data 232, network traffic reception data 234, TCP data 236, new session data 238, or any combination thereof to the network management system. In some examples, network device 200 may output network traffic transmission data 232, network traffic reception data 234, TCP data 236, new session data 238, or any combination thereof to a network management system in a sequence of blocs, outputting each bloc of the sequence of blocs according to an output frequency (e.g., one bloc each second, one block each minute, one bloc each hour). In some examples, network device 200 may output network traffic transmission data 232, network traffic reception data 234, TCP data 236, new session data 238, or any combination thereof to a network management system in response to receiving a request from the network management system.

Since network device 200 may represent one network device of network devices 122 of FIGS. 1A and 1C, network traffic transmission data 232, network traffic reception data 234, TCP data 236, and new session data 238 may represent network traffic and session data corresponding to only one network device of network devices 122. Each network device of network devices 122 may collect and store network traffic and session data, and each network device of network devices 122 may output network traffic and session data to NMS 130. In some examples, network traffic transmission data 232, network traffic reception data 234, TCP data 236, and new session data 238 may be different from network traffic and session data corresponding to one or more other network devices of network devices 122.

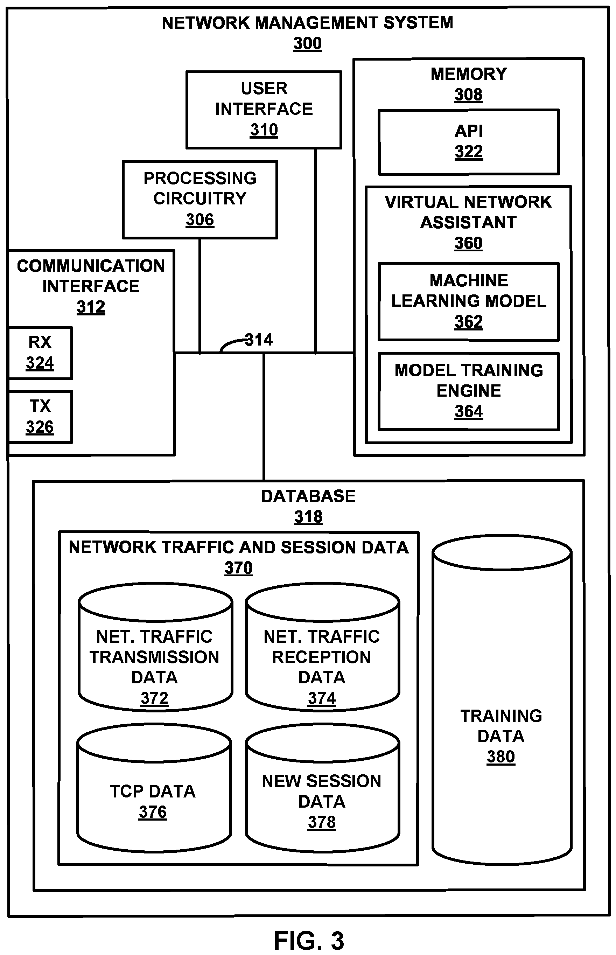

FIG. 3 is a block diagram of an example NMS 300, in accordance with one or more techniques of the disclosure. NMS 300 may be used to implement, for example, NMS 130 in FIGS. 1A-1C. In such examples, NMS 300 is responsible for monitoring and management of one or more wireless networks 106 at sites 102 of FIG. 1A, respectively. In some examples, NMS 300 is responsible for monitoring and management of network devices 122 of network 120 of FIG. 1A. In some examples, NMS 300 is responsible for monitoring and management of switches 126 and servers 128 of FIG. 1A.

In some examples, NMS 300 and network devices 122 are located within an internal network controlled by an administrator. That is, administrator device 111 may output one or more instructions to control, configure, or otherwise manage network devices 122 and/or NMS 130 based on receiving instructions from an administrator. For example, administrator device 111 may output one or more instructions to configure a plurality of internal network pathways through network devices 122 that are part of a plurality of end-to-end pathways. In some examples, each end-to-end pathway of the plurality of end-to-end pathways may connect one or more UEs 148 with one or more servers of servers 128A. But at least a portion of an end-to-end pathway between a UE of UEs 148 and a server of servers 128 may be located outside of the internal network corresponding to network devices 122 and NMS 300. For example, switches 126, servers 128, connections 129, APs 142, and switches 146 may be located outside of the internal network. This means that although an end-to-end pathway between UE 148A-1 and server 128A traverses an internal network pathway through network devices 122A within the internal network, the end-to-end pathway between UE 148A-1 and server 128A may in some cases traverse one or more external network pathways including AP 142A-1, switch 146A, switch 126A, and connection 129A which are located outside of the internal network.

NMS 300 includes a processing circuitry 306, memory 308, user interface 310, communication interface 312, and database 318. Memory 308 is configured to store application programming interface (API) 322 and VNA 360 including machine learning model 362 and model training engine. Communication interface 330 includes a receiver 324 and a transmitter 326. Database 318 is configured to store network traffic and session data 370 and training data 380. Network traffic and session data 370 includes network traffic transmission data 372, network traffic reception data 374, TCP data 376, and new session data 378. Although database 318 is illustrated in FIG. 3 as being separate from memory 308, in some examples, memory 308 is configured to store database 318.

The various elements are coupled together via a bus 314 over which the various elements may exchange data and information. Processing circuitry 306 may be an example of processing circuitry 132 of FIGS. 1A-1B. Memory 308 may be an example of memory 133 of FIGS. 1A-1B. VNA 360 may be an example of VNA 134 of FIGS. 1A-1B. Machine learning model 362 may be an example of machine learning model 135 of FIGS. 1A-1B. Network traffic and session data 370 may be an example of network traffic and session data 136 of FIGS. 1A-1B. Training data 380 may be an example of training data 138 of FIGS. 1A-1B.

In some examples, NMS 300 receives data from one or more of network devices 122, switches 126, servers 128, APs 142, switches 146, LTEs 148, routers 187 and other network nodes within network system 100, which may be used to calculate one or more metrics corresponding to network system 100. NMS 300 may analyze this data for cloud-based monitoring and/or management of wireless networks 106 at sites 102, monitoring and/or management of network devices 122, and monitoring and/or management of switches 126 and servers 128. In some examples, NMS 300 may be part of another server shown in FIG. 1A or a part of any other server.

Processing circuitry 306 may include fixed function circuitry and/or programmable processing circuitry. Processing circuitry 306 may include any one or more of a microprocessor, a controller, a DSP, GPU, TPU, an ASIC, an FPGA, or equivalent discrete or analog logic circuitry. In some examples, processing circuitry 306 may include multiple components, such as any combination of one or more microprocessors, one or more controllers, one or more DSPs, GPUs, TPUs, one or more ASICs, or one or more FPGAs, as well as other discrete or integrated logic circuitry, which may be physically located in one or more devices in one or more physical locations. Processing circuitry 306 may execute software instructions, such as those used to define a software or computer program, stored to a computer-readable storage medium (such as memory 308), such as non-transitory computer-readable mediums including a storage device (e.g., a disk drive, or an optical drive) or a memory (such as Flash memory or RAM) or any other type of volatile or non-volatile memory, that stores instructions to cause the processing circuitry 306 to perform the techniques described herein. A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

Processing circuitry 306 may be capable of processing instructions stored in memory 308. In some examples, memory 308 includes a computer-readable medium that includes instructions that, when executed by processing circuitry 306, cause NMS 300 and processing circuitry 306 to perform various functions attributed to them herein. Memory 308 may include any volatile, non-volatile, magnetic, optical, or electrical media, such as a RAM, ROM, NVRAM, EEPROM, FRAM, DRAM, flash memory, or any other digital media. Memory 308 may include one or more devices configured to store programming modules and/or data associated with operation of NMS 300. For example, memory 308 may include a computer-readable storage medium, such as a non-transitory computer-readable medium including a storage device (e.g., a disk drive, or an optical drive) or a memory (such as Flash memory or RAM) or any other type of volatile or non-volatile memory, that stores instructions to cause the processing circuitry 306 to perform the techniques described herein. A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

A user, such as an administrator, may interact with NMS 300 through user interface 310. User interface 310 may include a display such as liquid crystal display (LCD), light-emitting diode (LED) display, or other type of screen, with which processing circuitry 306 may present information related to NMS 300, network devices, or other devices of network system 100. In addition, user interface 310 may include an input mechanism to receive input from the user. The input mechanisms may include, for example, any one or more of buttons, a keypad (e.g., an alphanumeric keypad), a peripheral pointing device, a touch screen, or another input mechanism that allows the user to navigate through user interfaces presented by processing circuitry 306 of NMS 300 and provide input. In other examples, user interface 310 also includes audio circuitry for providing audible notifications, instructions or other sounds to the user, receiving voice commands from the user, or both. Memory 308 may include instructions for operating user interface 310.

Communication interface 312 may include, for example, an Ethernet interface. Communication interface 312 couples NMS 300 to a network and/or the Internet, such as any of network 120 as shown in FIG. 1A, and/or any local area networks. Communication interface 312 includes a receiver 324 and a transmitter 326 via which NMS 300 receives/transmits data and information to/from any of servers 110, 116, 118, network devices 122, servers 128, APs 142, switches 146, LTEs 148 and/or any other network nodes, devices, or systems forming part of network system 100 such as shown in FIGS. 1A-1C. In some scenarios described herein in which network system 100 includes "third-party" network devices that are owned and/or associated with different entities than NMS 300, NMS 300 does not receive, collect, or otherwise have access to network data from the third-party devices. For example, when switches 126 and/or servers 128 are third-party devices located outside of an internal network corresponding to NMS 300 and network devices 122, NMS 300 does not receive, collect, or otherwise have access to network data from switches 126 and/or servers 128. Additionally, or alternatively, when APs 142, switches 146, and UEs 148 are third-party devices located outside of an internal network corresponding to NMS 300 and network devices 122, NMS 300 does not receive, collect, or otherwise have access to network data from APs 142, switches 146, and UEs 148.

The data and information received by NMS 300 via communication interface 312 may include, for example, network traffic and session data 370. As seen in FIG. 3, network traffic and session data 370 includes network traffic transmission data 372, network traffic reception data 374, TCP data 376, and new session data 378. In some examples, network traffic transmission data 372 may include network traffic transmission data from each network device of one or more network devices, including network traffic transmission data 232 corresponding to network device 200 of FIG. 2. In some examples, network traffic reception data 374 may include network traffic reception data from each network device of one or more network devices, including network traffic reception data 234 corresponding to network device 200 of FIG. 2. In some examples, TCP data 376 may include TCP data from each network device of one or more network devices, including TCP data 236 corresponding to network device 200 of FIG. 2. In some examples, new session data 378 may include new session data from each network device of one or more network devices, including new session data 238 corresponding to network device 200 of FIG. 2.

In some examples, network traffic transmission data 372 may indicate an amount of network traffic transmitted by each network device of network devices 122 via each internal network pathway of a plurality of internal network pathways through network devices 122. In some examples, network traffic reception data 374 may indicate an amount of network traffic received by each network device of network devices 122 via each internal network pathway of the plurality of internal network pathways through network devices 122. In some examples, TCP data 376 may indicate a number of TCP SYN packets, TCP SYN-ACK packets, and/or TCP ACK packets forwarded by each network device of network devices 122 via each internal network pathway of the plurality of internal network pathways through network devices 122. In some examples, new session data 378 may indicate a number of new sessions failed to establish via each network device of network devices 122 corresponding to each internal network pathway of the plurality of internal network pathways.

NMS 300 may, in some examples, receive network traffic and session data 370 continuously as network devices 122 receive network traffic, transmit network traffic, forward TCP handshake packets, and establish new sessions. In some examples, NMS 300 may output a request for network traffic and session data 370 and, in response to the request, receive network traffic and session data 370 from network devices 122. In some examples, NMS 300 may receive network traffic and session data 370 in a sequence of blocs, each bloc of the sequence of blocs arriving according to a scheduled frequency (e.g., each second, minute, or hour).

Processing circuitry 306 may apply machine learning model 362 to detect, based on network traffic and session data 370, a network failure outside of the internal network corresponding to NMS 300 and network devices 122. That is, machine learning model 362 may process network traffic and session data 370 to generate an output indicating the network failure. In some examples, to apply machine learning model 362 to detect the network failure, processing circuitry 306 is configured to determine that one or more network devices network devices 122 are unable to exchange network traffic with a server of servers 128 via one or more external network pathways. In some examples, to apply machine learning model 362 to detect the network failure, processing circuitry 306 is further configured to determine that the network failure is associated with a network connection of a plurality of network connections (e.g., connections 129) outside of the internal network along an external network pathway, wherein the network connection is located between the server of servers 128 and the network devices 122.

In some examples, machine learning model 362 may generate an output that indicates a precise location of a detected network failure. Since NMS 300 receives network traffic and session data 370 from a plurality of network devices (e.g., each of network devices 122, machine learning model 362 may analyze network traffic and session data 370 corresponding to a plurality of internal network pathways through the plurality of network devices. These plurality of internal network pathways through the plurality of network devices may be associated with a plurality of external network pathways outside of the internal network corresponding to NMS 300 and network devices 122. A plurality of end-to-end pathways may exist between UEs 148 and servers 128, each pathway of the plurality of end-to-end pathways including one or more internal network pathways and one or more external network pathways. Machine learning model 362 may identify a location outside of the internal network corresponding to a network failure based on network traffic and session data 370 received from within the internal network.

When network traffic and session data 370 indicates that one or more sessions with server 128A of FIG. 1C are operational via one or more pathways that connect to server 128A via connection 123H, switch 126B and connection 129B and network traffic and session data 370 indicates that one or more sessions with server 128A of FIG. 1C are not operational via one or more end-to-end pathways that connect to server 128A via connection 123G, switch 126A, and connection 129A, machine learning model 362 may determine that a network failure is located at connection 129A and/or switch 126A. This is because the machine learning model 362 would determine that there is no network failure at server 128A because sessions are active with server 128A via switch 126B and connection 129B. Since machine learning model 362 analyzes data collected from a plurality of network devices within an internal network that form a plurality of end-to-end pathways that connect to one or more devices outside of the internal network, machine learning model 362 may more accurately identify a location of a network failure as compared with systems that do not use a machine learning model to analyze data from network devices within an internal network.

Machine learning model 362 may identify a network failure by identifying one or more trends associated with network failures that machine learning model 362 learned when machine learning model 362 was trained using training data 380. For example, machine learning model 362 may identify a trend in the network traffic transmission data 372 and the network traffic reception data 374 indicating high levels of network traffic transmission to a server of servers 128 outside of the internal network and low levels of network traffic reception from the server. Machine learning model 362 is not limited to identifying levels of network traffic transmission and/or reception only associated with a server. Machine learning model 362 may analyze network traffic based on one or more external network pathways to the server. For example, machine learning model 362 may determine that there is a high level of network traffic transmission to server 128A and a low level of network traffic reception from server 128A via one or more pathways including connection 123H, switch 126B, and connection 129B of FIG. 1C, but normal levels of network traffic transmission and reception via one or more external network pathways including connection 123G, switch 126A, and connection 129A of FIG. 1C. In this example, machine learning model 362 may determine that there is a network failure associated with switch 126B and/or connection 129B and no network failure associated with switch 126A and/or connection 129A based on the identified patterns.

In some examples, machine learning model 362 may identify a network failure by identifying one or more trends associated with TCP data 376. TCP is a protocol where a session may be established between two endpoint devices. To establish a TCP session, a first endpoint device may send a TCP SYN packet to a second endpoint device, the second endpoint device may send a TCP SYN-ACK packet to the first endpoint device, and the first endpoint device may send a TCP ACK packet to the second endpoint device. This exchange of SYN, SYN-ACK, and ACK packets is sometimes referred to as a "three-way handshake." When a TCP session fails, one or more endpoint devices may try to reestablish the session by initiating another three-way handshake. This may be referred to as a "TCP reset." Machine learning model 362 may identify a trend indicating that there is an increased amount of TCP resets associated with a server of servers 128 and/or an increased amount of TCP resets associated with one or more external network pathways associated with the server of servers 128. In some examples, machine learning model 362 may determine that there is an increased volume of TCP SYN packets sent to a server of servers 128 via one or more external network pathways and a decreased volume or no volume of TCP SYN-ACK packets received from the server in response to SYN packets. Machine learning model 362 may determine that a network failure exists in the one or more external network pathways based on identifying this trend.

Machine learning model 362 is not limited to analyzing TCP three-way handshakes to identify network failures. In some examples, machine learning model 362 may be configured to analyze new session data 378 corresponding to one or more protocols other than TCP to identify network failures, such as UDP, TLS, ICMP, or any combination thereof. That is, new session data 378 may indicate, for each network device of network devices 122, a number of new sessions failed to establish according to any communication session protocol via the network device corresponding to each server of servers 128. In some examples, machine learning model 362 may identify a pattern indicating that a number of new sessions established between a server of servers 128 and LTEs 148 via one or more internal network pathways and/or external network pathways is decreased from baseline levels or near zero. Machine learning model 362 may determine that a network failure exists at server 128A or the one or more external network pathways connecting to server 128A based on identifying this trend.

Processing circuitry 306 of NMS 300 may apply model training engine 364 to train machine learning model 362 using training data 380. In some examples, training data 380 may include a plurality of sets of training data. In some examples, each set of training data of the plurality of sets of training data may include network traffic and session data that includes at least one of network traffic transmission data, network traffic reception data, TCP data, and new session data. In this way, each set of training data of the plurality of sets of training data may include data that is similar in kind to data that is present in the network traffic and session data 370 received from network devices 122 of FIG. 1A. In some examples, training data 380 may include sets of training network data corresponding to network traffic and session data received from network devices 122 that is separate from network traffic and session data 370, but this is not required. Training data 380 may include sets training network data corresponding to any network device within any network.

Each set of training data of the plurality of sets of training data of training data 380 may include information indicating whether the set of training data is associated with a network failure. In some examples, each set of training data of the plurality of sets of training data of training data 380 may be associated with information in addition to or alternatively to whether the set of training data is associated with a network failure. For example, sets of training data may be associated with information indicating a type of network failure associated with the data (e.g., black hole or another type of network failure), a location of a network failure associated with the data (e.g., at a server, at a switch, at a connection, a severity of the network failure (e.g., total network failure or partial network failure), or any combination thereof.

Based on the information associated with each set of training data of the plurality of sets of training data and based on the plurality of sets of training data of training data 380, processing circuitry 306 may apply model training engine 364 to use supervised learning to train machine learning model 362. Supervised machine learning involves using a labeled set of training data to train a machine learning model based on one or more patterns between the labels of the training data and the training data itself. For example, information indicating whether a set of training data is associated with a network failure is a label. In the process of training machine learning model 362, model training engine 364 may identify one or more patterns in training data 380 associated with network failure and/or identify one or more patterns in training data 380 associated a healthy network. Machine learning model 362 may learn these patterns as it is trained by model training engine 264 such that machine learning model 362 may detect network failure based on these patterns once trained.

Model training engine 364 is not limited to using supervised learning to generate machine learning model 364. Example machine learning techniques that may be employed to generate machine learning model 352 include various learning styles, such as supervised learning, unsupervised learning, and semi-supervised learning. Example types of algorithms include Bayesian algorithms, Markov models, Hawkes processes, Clustering algorithms, decision-tree algorithms, regularization algorithms, regression algorithms, instance-based algorithms, artificial neural network algorithms, deep learning algorithms, dimensionality reduction algorithms and the like. Various examples of specific algorithms include Bayesian Linear Regression, Boosted Decision Tree Regression, and Neural Network Regression, Back Propagation Neural Networks, self-attention models, Convolutional Neural Networks (CNNs), Long Short Term Networks (LSTMs), the Apriori algorithm, K-Means Clustering, k-Nearest Neighbors (kNN), Learning Vector Quantization (LVQ), Self-Organizing Map (SOM), Locally Weighted Learning (LWL), Ridge Regression, Least Absolute Shrinkage and Selection Operator (LASSO), Elastic Net, and Least-Angle Regression (LARS), Principal Component Analysis (PCA) and Principal Component Regression (PCR).

In some examples, when NMS 300 uses machine learning model 362 to identify one a network based on network traffic and session data 370, NMS 300 may determine whether machine learning model 362 accurately identified the network failure. For example, when NMS 300 determines that machine learning model 362 correctly identified the network failure, correctly identified a location of the network failure, incorrectly identified the network failure, incorrectly identified the location of the network failure, or any combination thereof, NMS 300 may save this information along with the network traffic and session data 370 used to identify the network failure. In some examples, NMS 300 may save the network traffic and session data 370 used to identify the network failure and the information indicating the accuracy of the identification to training data 380.

Model training engine 364 may, in some examples, re-train the machine learning model 362 based on the training data 380 augmented with the network traffic and session data 370 used to identify a network failure and the information indicating the accuracy of the identification. In some examples, NMS 300 may continuously receive new network traffic and session data 370 received from network devices 122 of FIG. 1A, continuously augment training data 380 with network traffic and session data 370 and information indicating accuracy of network failure identifications, and continuously use model training engine 364 to re-train machine learning model 362 using augmented training data 380. In other words, NMS 300 may improve machine learning model 362 as machine learning model 262 is used.

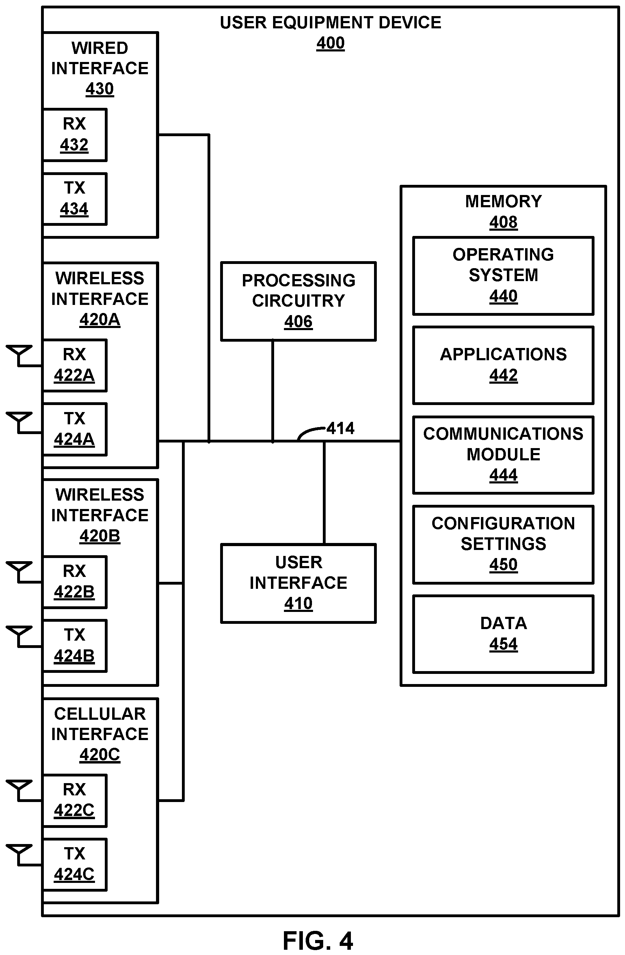

FIG. 4 shows an example LTE device 400, in accordance with one or more techniques of this disclosure. Example LTE device 400 shown in FIG. 4 may be used to implement any of LTEs 148 as shown and described herein with respect to FIG. 1A. UE device 400 may include any type of wireless client device, and the disclosure is not limited in this respect. For example, UE device 400 may include a mobile device such as a smart phone, tablet or laptop computer, a personal digital assistant (PDA), a wireless terminal, a smart watch, a smart ring, or any other type of mobile or wearable device. In some examples, UE device 400 may also include a wired client-side device, e.g., an IoT device such as a printer, a security sensor or device, an environmental sensor, or any other device connected to the wired network and configured to communicate over one or more wireless networks.

UE device 400 includes a wired interface 430, wireless interfaces 420A-420C, processing circuitry 406, memory 408, and a user interface 410. The various elements are coupled together via a bus 414 over which the various elements may exchange data and information. Wired interface 430 represents a physical network interface and includes a receiver 432 and a transmitter 434. Wired interface 430 may be used, if desired, to couple, either directly or indirectly, LTE device 400 to a wired network device, such as one of switches 146 of FIG. 1A, within the wired network via a cable, such as one of Ethernet cables 144 of FIG. 1A.

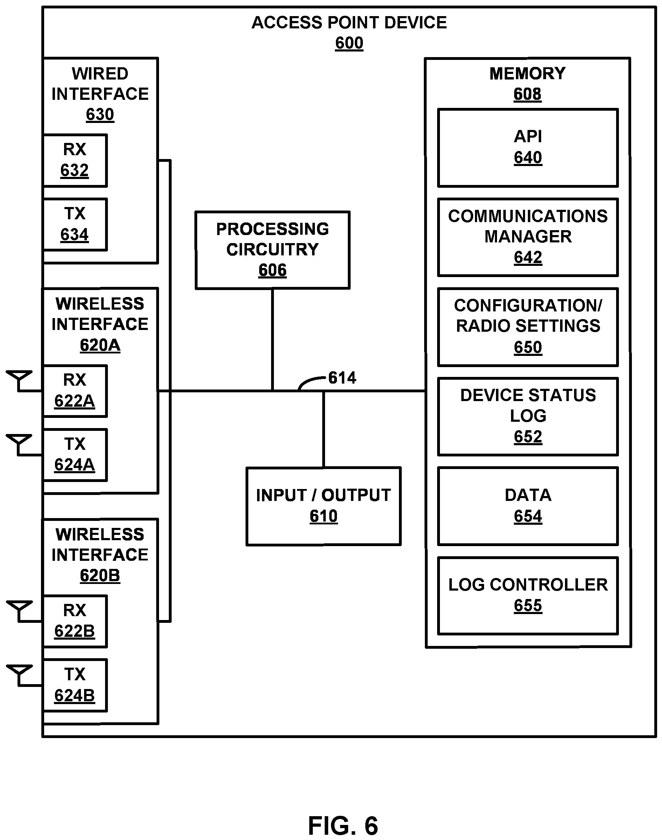

First, second and third wireless interfaces 420A, 420B, and 420C include receivers 422A, 422B, and 422C, respectively, each including a receive antenna via which UE device 400 may receive wireless signals from wireless communications devices, such as APs 142 of FIG. 1A, AP 600 of FIG. 6, other LTEs 148, or other devices configured for wireless communication. First, second, and third wireless interfaces 420A, 420B, and 420C further include transmitters 424A, 424B, and 424C, respectively, each including transmit antennas via which UE device 400 may transmit wireless signals to wireless communications devices, such as APs 142 of FIG. 1A, AP 600 of FIG. 6, other LTEs 148 and/or other devices configured for wireless communication. In some examples, first wireless interface 420A may include a Wi-Fi 802.11 interface (e.g., 2.4 GHz and/or 5 GHz) and second wireless interface 420B may include a Bluetooth interface and/or a Bluetooth Low Energy interface. Third wireless interface 420C may include, for example, a cellular interface through which LTE device 400 may connect to a cellular network.

Processing circuitry 406 may include fixed function circuitry and/or programmable processing circuitry. Processing circuitry 406 may include any one or more of a microprocessor, a controller, a DSP, GPU, TPU, an ASIC, an FPGA, or equivalent discrete or analog logic circuitry. In some examples, processing circuitry 406 may include multiple components, such as any combination of one or more microprocessors, one or more controllers, one or more DSPs, GPUs, TPUs, one or more ASICs, or one or more FPGAs, as well as other discrete or integrated logic circuitry, which may be physically located in one or more devices in one or more physical locations. Processing circuitry 406 may execute software instructions, such as those used to define a software or computer program, stored to a computer-readable storage medium (such as memory 408), such as non-transitory computer-readable mediums including a storage device (e.g., a disk drive, or an optical drive) or a memory (such as Flash memory or RAM) or any other type of volatile or non-volatile memory, that stores instructions to cause the processing circuitry 406 to perform the techniques described herein.

Processing circuitry 406 may be capable of processing instructions stored in memory 408. In some examples, memory 408 includes a computer-readable medium that includes instructions that, when executed by processing circuitry 406, cause UE device 400 and processing circuitry 406 to perform various functions attributed to them herein. Memory 408 may include any volatile, non-volatile, magnetic, optical, or electrical media, such as a RAM, ROM, NVRAM, EEPROM, FRAM, DRAM, flash memory, or any other digital media. Memory 408 may include one or more devices configured to store programming modules and/or data associated with operation of UE device 400. For example, memory 408 may include a computer-readable storage medium, such as a non-transitory computer-readable medium including a storage device (e.g., a disk drive, or an optical drive) or a memory (such as Flash memory or RAM) or any other type of volatile or non-volatile memory, that stores instructions to cause the processing circuitry 406 to perform the techniques described herein.

A user may interact with UE device 400 through user interface 410. User interface 310 may include a display such as liquid crystal display (LCD), light-emitting diode (LED) display, organic LED (OLED), or other type of screen, with which processing circuitry 406 may present information related to UE device 400 and/or one or more services received by UE device 400. In addition, user interface 410 may include an input mechanism to receive input from the user. The input mechanisms may include, for example, any one or more of buttons, a keypad (e.g., an alphanumeric keypad), a peripheral pointing device, a touch screen, or another input mechanism that allows the user to navigate through user interfaces presented by processing circuitry 406 of LTE device 400 and provide input. In other examples, user interface 410 also includes audio circuitry for providing audible notifications, instructions or other sounds to the user, receiving voice commands from the user, or both. Memory 408 may include instructions for operating user interface 410.

In this example, memory 408 includes an operating system 440, applications 442, a communications module 444, configuration settings 450, and data 454. Communications module 444 includes program code that, when executed by processing circuitry 406, enables UE device 400 to communicate using any of wired interface(s) 430, wireless interfaces 420A-420B and/or cellular interface 450C. Configuration settings 450 include any device settings for UE device 400 settings for each of wireless interface(s) 420A-420B and/or cellular interface 420C.

Data 454 may include, for example, a status/error log including a list of events specific to LTE device 400. The events may include a log of both normal events and error events according to a logging level based on instructions from NMS 130. Data 454 may store any data used and/or generated by UE device 400, such as data used to calculate one or more metrics or identify relevant behavior data, that is collected by LTE device 400 and either transmitted directly to NMS 130 or transmitted to any of APs 142 in a wireless network of wireless networks 106 for further transmission to NMS 130.

As described herein, LTE device 400 may measure and report network data from data 454 to NMS 130. The network data may comprise event data, telemetry data, and/or other data. In some examples, the network data may include data corresponding to one or more sessions between LTE device 400 and a service provider device such as a server of servers 128. For example, UE device 400 may form one or more sessions with a service provider device such as a server of a video streaming service. Data 454 may include information corresponding to the one or more sessions including information indicating a quality of one or more sessions and/or data corresponding to one or more failed sessions. The network data may include various parameters indicative of the performance and/or status of the wireless network.

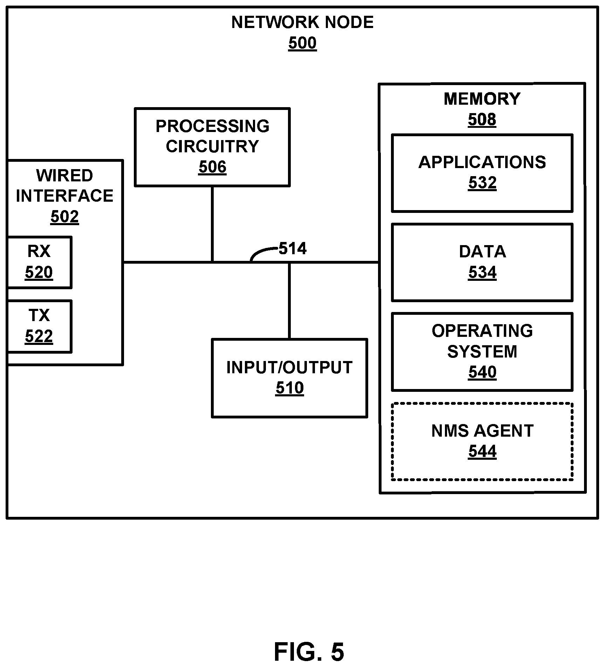

FIG. 5 is a block diagram illustrating an example network node 500, in accordance with one or more techniques of this disclosure. In one or more examples, the network node 500 implements a device or a server attached to the network 120 of FIG. 1A, e.g., switches 146, AAA server 110, administrator device 111 DHCP server 116, DNS server 118, switches 126, servers 128, switches 146, or another network device supporting one or more of wireless networks 106, wired LANs 175, or SD-WAN 177, or data center 179 of FIG. 1B, e.g., routers 187.

In this example, network node 500 includes a wired interface 502, e.g., an Ethernet interface, processing circuitry 506, a memory 508, and input/output 510, e.g., display, buttons, keyboard, keypad, touch screen, mouse, etc., coupled together via a bus 514 over which the various elements may interchange data and information. Wired interface 502 couples the network node 500 to a network, such as an enterprise network. Though only one interface is shown by way of example, network nodes may, and usually do, have multiple communication interfaces and/or multiple communication interface ports. Wired interface 502 includes a receiver 520 and a transmitter 522.

Processing circuitry 506 may include fixed function circuitry and/or programmable processing circuitry. Processing circuitry 506 may include any one or more of a microprocessor, a controller, a DSP, GPU, TPU, an ASIC, an FPGA, or equivalent discrete or analog logic circuitry. In some examples, processing circuitry 506 may include multiple components, such as any combination of one or more microprocessors, one or more controllers, one or more DSPs, GPUs, TPUs, one or more ASICs, or one or more FPGAs, as well as other discrete or integrated logic circuitry, which may be physically located in one or more devices in one or more physical locations. Processing circuitry 506 may execute software instructions, such as those used to define a software or computer program, stored to a computer-readable storage medium (such as memory 508), such as non-transitory computer-readable mediums including a storage device (e.g., a disk drive, or an optical drive) or a memory (such as Flash memory or RAM) or any other type of volatile or non-volatile memory, that stores instructions to cause the processing circuitry 506 to perform the techniques described herein.

Processing circuitry 506 may be capable of processing instructions stored in memory 508. In some examples, memory 508 includes a computer-readable medium that includes instructions that, when executed by processing circuitry 506, cause network node 500 and processing circuitry 506 to perform various functions attributed to them herein. Memory 508 may include any volatile, non-volatile, magnetic, optical, or electrical media, such as a RAM, ROM, NVRAM, EEPROM, FRAM, DRAM, flash memory, or any other digital media. Memory 508 may include one or more devices configured to store programming modules and/or data associated with operation of network node 500. For example, memory 508 may include a computer-readable storage medium, such as a non-transitory computer-readable medium including a storage device (e.g., a disk drive, or an optical drive) or a memory (such as Flash memory or RAM) or any other type of volatile or non-volatile memory, that stores instructions to cause the processing circuitry 506 to perform the techniques described herein.

Memory 508 stores executable software applications 532, data 534, operating system 540, and NMS agent 544. Data 534 may include a system log and/or an error log that stores event data, including behavior data, for network node 500. In examples where network node 500 comprises a "third-party" network device, the same entity does not own or have access to both the APs or wired client-side devices and network node 500. As such, in the example where network node 500 is a third-party network device, NMS 130 does not receive, collect, or otherwise have access to the network data from network node 500.

In examples where network node 500 comprises a server, network node 500 may receive data and information, e.g., including operation related information, e.g., handshake request, session request, registration request, AAA services, DHCP requests, Simple Notification Service (SNS) lookups, and Web page requests via receiver 520, and send data and information, e.g., including configuration information, authentication information, web page data, services, etc. via transmitter 522.

In examples where network node 500 comprises a wired network device, network node 500 may be connected via wired interface 502 to one or more APs or other wired client-side devices, e.g., IoT devices. For example, network node 500 may include multiple wired interfaces 502 and/or wired interface 502 may include multiple physical ports to connect to multiple APs or the other wired-client-side devices within a site via respective Ethernet cables. In some examples, each of the APs or other wired client-side devices connected to network node 500 may access the wired network via wired interface 502 of network node 500. In some examples, one or more of the APs or other wired client-side devices connected to network node 500 may each draw power from network node 500 via the respective Ethernet cable and a Power over Ethernet (PoE) port of wired interface 502.

In examples where network node 500 comprises a session-based router that employs a stateful, session-based routing scheme, network node 500 may be configured to independently perform path selection and traffic engineering. The use of session-based routing may enable network node 500 to eschew the use of a centralized controller, such as an SDN controller, to perform path selection and traffic engineering, and eschew the use of tunnels. In some examples, network node 500 may implement session-based routing as Secure Vector Routing (SVR), provided by Juniper Networks, Inc. In the case where network node 500 comprises a session-based router operating as a network gateway for a site of an enterprise network (e.g., router 187A of FIG. 1B), network node 500 may establish multiple peer paths (e.g., path 189 of FIG. 1B) over an underlying physical WAN (e.g., SD-WAN 177 of FIG. 1B) with one or more other session-based routers operating as network gateways for other sites of the enterprise network (e.g., router 187B of FIG. 1B). Network node 500, operating as a session-based router, may collect data at a peer path level, and report the peer path data to NMS 130.

In examples where network node 500 comprises a packet-based router, network node 500 may employ a packet- or flow-based routing scheme to forward packets according to defined network paths, e.g., established by a centralized controller that performs path selection and traffic engineering. In the case where network node 500 comprises a packet-based router operating as a network gateway for a site of an enterprise network (e.g., router 187A of FIG. 1B), network node 500 may establish multiple tunnels (e.g., path 189 of FIG. 1B) over an underlying physical WAN (e.g., SD-WAN 177 of FIG. 1B) with one or more other packet-based routers operating as network gateways for other sites of the enterprise network (e.g., router 187B of FIG. 1B). Network node 500, operating as a packet-based router, may collect data at a tunnel level, and the tunnel data may be retrieved by NMS 130 via an API or an open configuration protocol or the tunnel data may be reported to NMS 130 by NMS agent 544 or another module running on network node 500.

The data collected and reported by network node 500 may include periodically reported data and event-driven data. Network node 500 is configured to collect logical path statistics via bidirectional forwarding detection (BFD) probing and data extracted from messages and/or counters at the logical path (e.g., peer path or tunnel) level. In some examples, network node 500 is configured to collect statistics and/or sample other data according to a first periodic interval, e.g., every 3 seconds, every 5 seconds, etc. Network node 500 may store the collected and sampled data as path data, e.g., in a buffer.

In some examples, network node 500 optionally includes an NMS agent 544. NMS agent 544 may periodically create a package of the statistical data according to a second periodic interval, e.g., every 3 minutes. In some examples, the package of statistical data may also include details about clients connected to network node 500 and the associated client sessions. NMS agent 544 may then report the package of statistical data to NMS 130 in the cloud. In other examples, NMS 130 may request, retrieve, or otherwise receive the package of statistical data from network node 500 via an API, an open configuration protocol, or another of communication protocols. The package of statistical data created by NMS agent 544 or another module of network node 500 may include a header identifying network node 500 and the statistics and data samples for each of the logical paths from network node 500. In still other examples, NMS agent 544 reports event data to NMS 130 in the cloud in response to the occurrence of certain events at network node 500 as the events happen.

FIG. 6 is a block diagram of an example AP device 600, in accordance with one or more techniques of this disclosure. Example AP device 600 shown in FIG. 6 may be used to implement any of APs 142 as shown and described herein with respect to FIG. 1A. AP device 600 may comprise, for example, a Wi-Fi, Bluetooth and/or Bluetooth Low Energy (BLE) base station or any other type of wireless access point.

In the example of FIG. 6, AP device 600 includes a wired interface 630, wireless interfaces 620A-620B processing circuitry 606, memory 608, and input/output 210, coupled together via a bus 614 over which the various elements may exchange data and information. Wired interface 630 represents a physical network interface and includes a receiver 632 and a transmitter 634 for sending and receiving network communications, e.g., packets. Wired interface 630 couples, either directly or indirectly, AP device 600 to a wired network device, such as one of switches 146 of FIG. 1A, within the wired network via a cable, such as an Ethernet cable.

First and second wireless interfaces 620A and 620B represent wireless network interfaces and include receivers 622A and 622B, respectively, each including a receive antenna via which AP device 600 may receive wireless signals from wireless communications devices, such as UEs 148 of FIG. 1A. First and second wireless interfaces 620A and 620B further include transmitters 624A and 624B, respectively, each including transmit antennas via which AP device 600 may transmit wireless signals to wireless communications devices, such as LTEs 148 of FIG. 1A. In some examples, first wireless interface 620A may include a Wi-Fi 802.11 interface (e.g., 2.4 GHz and/or 5 GHz) and second wireless interface 620B may include a Bluetooth interface and/or a BLE interface.

Processing circuitry 606 may include fixed function circuitry and/or programmable processing circuitry. Processing circuitry 606 may include any one or more of a microprocessor, a controller, a DSP, GPU, TPU, an ASIC, an FPGA, or equivalent discrete or analog logic circuitry. In some examples, processing circuitry 606 may include multiple components, such as any combination of one or more microprocessors, one or more controllers, one or more DSPs, GPUs, TPUs, one or more ASICs, or one or more FPGAs, as well as other discrete or integrated logic circuitry, which may be physically located in one or more devices in one or more physical locations. Processing circuitry 606 may execute software instructions, such as those used to define a software or computer program, stored to a computer-readable storage medium (such as memory 608), such as non-transitory computer-readable mediums including a storage device (e.g., a disk drive, or an optical drive) or a memory (such as Flash memory or RAM) or any other type of volatile or non-volatile memory, that stores instructions to cause the processing circuitry 606 to perform the techniques described herein.

Processing circuitry 606 may be capable of processing instructions stored in memory 608. In some examples, memory 608 includes a computer-readable medium that includes instructions that, when executed by processing circuitry 606, cause network node 500 and processing circuitry 606 to perform various functions attributed to them herein. Memory 608 may include any volatile, non-volatile, magnetic, optical, or electrical media, such as a RAM, ROM, NVRAM, EEPROM, FRAM, DRAM, flash memory, or any other digital media. Memory 608 may include one or more devices configured to store programming modules and/or data associated with operation of AP device 600. For example, memory 608 may include a computer-readable storage medium, such as a non-transitory computer-readable medium including a storage device (e.g., a disk drive, or an optical drive) or a memory (such as Flash memory or RAM) or any other type of volatile or non-volatile memory, that stores instructions to cause the processing circuitry 606 to perform the techniques described herein.

In this example, memory 608 stores executable software including an API 640, a communications manager 642, configuration settings 650, a device status log 652, data 654, and log controller 655. Device status log 652 includes a list of events specific to AP device 600. The events may include a log of both normal events and error events such as, for example, memory status, reboot or restart events, crash events, cloud disconnect with self-recovery events, low link speed or link speed flapping events, Ethernet port status, Ethernet interface packet errors, upgrade failure events, firmware upgrade events, configuration changes, etc., as well as a time and date stamp for each event. Log controller 655 determines a logging level for the device based on instructions from NMS 130. Data 654 may store any data used and/or generated by AP device 600, including data collected from UEs 148, such as data used to calculate one or more metrics, that is transmitted by AP device 600 for cloud-based management of wireless networks 106 by NMS 130.

Input/output (I/O) 610 represents physical hardware components that enable interaction with a user, such as buttons, a display, and the like. Although not shown, memory 608 typically stores executable software for controlling a user interface with respect to input received via I/O 610. Communications manager 642 includes program code that, when executed by processing circuitry 606, allow AP device 600 to communicate with LTEs 148 and/or network 120 via any of wired interface 630 and/or wireless interfaces 620A-620B. Configuration settings 650 include any device settings for AP device 600 such as radio settings for each of wireless interfaces 620A-620B. These settings may be configured manually or may be remotely monitored and managed by NMS 130 to optimize wireless network performance on a periodic (e.g., hourly or daily) basis.

As described herein, AP device 600 may measure and report network data from device status log 652 to NMS 130. The network data may comprise event data, telemetry data, and/or other data. The network data may include various parameters indicative of the performance and/or status of the wireless network. The parameters may be measured and/or determined by one or more of the UE devices and/or by one or more of the APs in a wireless network. NMS 130 may determine one or more metrics based on the data received from the APs in the wireless network and store the metrics in a memory. In examples where AP device 600 comprises a "third-party" network device, the same entity does not own or have access to both NMS 130 and AP device 600. As such, in the example where AP device 600 is a third-party network device, NMS 130 does not receive, collect, or otherwise have access to the network data from AP device 600.

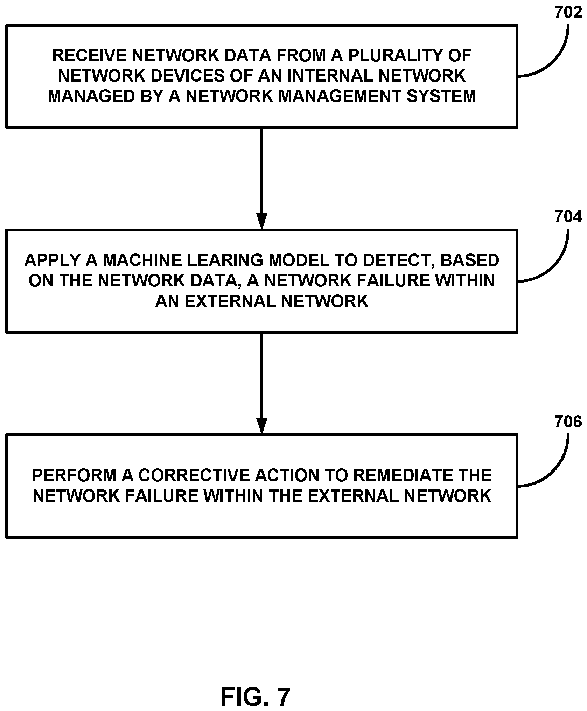

FIG. 7 is a flow diagram illustrating an example operation for using a machine learning model to detect one or more network failures, in accordance with one or more techniques of this disclosure. The example operation is described with respect to network system 100 FIGS. 1A-1C, and components thereof. However, the techniques of FIG. 7 may be performed by different components of sensor network system 100, or by additional or alternative systems.

NMS 130 may be configured to receive network data from network devices 122 of an internal network managed by a network management system 130 (702). Network devices 122 may, in some examples, connect LTEs 148 with servers 128 via one or more pathways through the internal corresponding to network devices 122. In some examples, the network data may include network traffic data and/or session data (e.g., network traffic and session data 136 of FIGS. 1A-1C). Network traffic data may include data corresponding to network traffic travelling through the one or more pathways through the internal network corresponding to network devices 122. Session data may include data corresponding to one or more sessions between UEs 148 and servers 128 via the one or more pathways through the internal network. In some examples, the network data received by NMS 130 includes network data corresponding to each network device of network devices 122. The internal network may include NMS 130 and network devices 122, but one or more devices may be located outside of the internal network within one or more external networks. For example, servers 128 and UEs 148 may be located in external networks.

Processing circuitry 132 of NMS 130 may be configured to apply a machine learning model to detect, based on the network data, a network failure within an external network (704). For example, machine learning model 135 may process the network data to identify the network failure. Machine learning model 135 may be trained to recognize one or more patterns in network data corresponding to network failure and/or recognize one or more patterns in network data corresponding to healthy network operation. For example, machine learning model 135 may be trained using supervised learning based on a set of labeled training data. The training data may include data similar in kind to the network data received from network devices 122 and one or more labels indicating information corresponding to the training data. The training data may include a label indicating whether the data is associated with network failure or is associated with a healthy network.

In some examples, an external network comprises one or more external devices (e.g., one or more of servers 128) and an edge device (e.g., a switch of switches 126) connecting the one or more external network devices to the internal network. To detect the network failure, processing circuitry 132 may in some examples be configured to apply machine learning model 135 to detect a failure of a link between the edge device and one of the plurality of external network devices (e.g., connection 129A between switch 126A and server 128A. Additionally, or alternatively, to detect the network failure, processing circuitry 122 is configured to apply the machine learning model to detect a failure of one of the external network devices (e.g., one of servers 128).

The external network may, in some examples, represent a first external network (e.g., an external network including switch 126A, switch 126B, and server 128A). To detect the network failure, the processing circuitry 122 may be configured to apply machine learning model 135 to detect blackholing of network traffic by a first edge device (e.g., switch 126A of the first external network. In some examples, a second edge device (e.g., switch 126B) of the first external network is not associated with blackholing. In some examples, a second external network (e.g., an external network including switch 126C and server 128B) is not associated with blackholing.

NMS 130 may perform a corrective action to remediate the network failure within the external network (706). Even though the network failure may be located in an external network, NMS 130 may be configured to reroute network traffic within the internal network such that the network traffic does not reach the network failure when the network traffic leaves the internal network. For example, when a network failure at connection 129A of FIG. 1C prevents network traffic from reaching server 128A via connection 123G, switch 126A, and connection 129A, NMS 130 may reroute network traffic to server 128A via connection 123H, switch 126B, and connection 129B to avoid the network failure at connection 129A. Additionally, or alternatively, NMS 130 may reroute network traffic to server 128B via connection 123I, switch 126C, and connection 129C to avoid the network failure at connection 129A when server 128A and 128B are controlled by the same service provider and/or provide similar services. Rerouting network traffic is not the only corrective action available to NMS 130. For example, NMS 130 may control the network devices 122 to avoid the forwarding of network traffic to an address associated with the network failure, withdraw a route to an address associated with the network failure, send a diagnostic message to an address associated with the network failure to confirm the network failure within the external network, or any combination thereof.

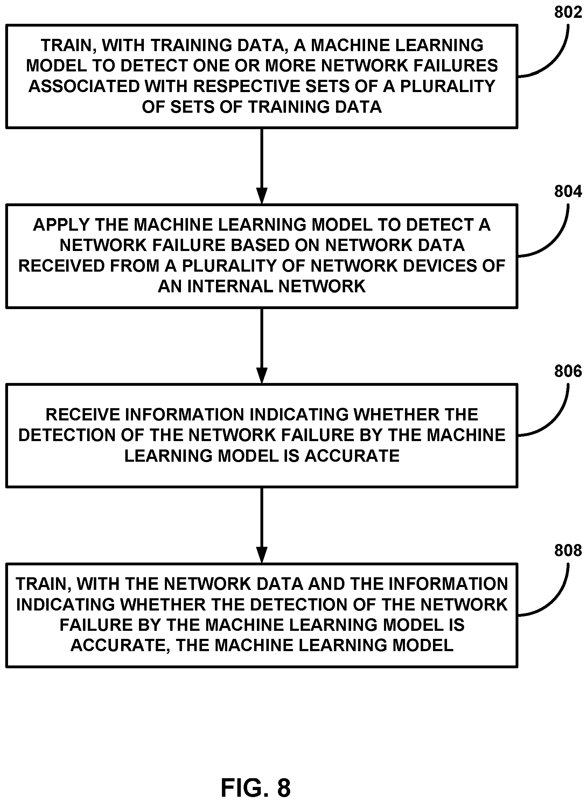

FIG. 8 is a flow diagram illustrating an example operation for training a machine learning model to detect network failures, in accordance with one or more techniques of this disclosure. The example operation is described with respect to network system 100 FIGS. 1A-1C, and components thereof. However, the techniques of FIG. 8 may be performed by different components of network system 100, or by additional or alternative systems.

Processing circuitry 132 of NMS 300 is configured to train, with training data 138, machine learning model 135 to detect one or more network failures associated with respective sets of a plurality of sets of training data (802). Each set of training network data of the plurality of sets of training network data may be associated with network status information indicating whether the set of training network data is associated with one or more network failure events. For example, the network status information may include information indicating whether the set of training network data is associated with a network failure or is associated with healthy network operation, information indicating a nature of a network failure associated with the set of training network data (e.g., black hole or other kind of network failure), information indicating a location of a network failure associated with the set of training network data (e.g., a location relative to one or more network devices), or any combination thereof.

By training the machine learning model 135, processing circuitry 132 of NMS 130 may cause machine learning model 135 to recognize one or more training network data patterns associated with network failure events. Since each set of training network data of the plurality of sets of training data 138 includes network status information indicating whether the set of training network data is associated with one or more network failure events, processing circuitry 132 of NMS 130 may train machine learning model 135 to identify one or more patterns is the training data 138 associated with sets of training network data labeled as being associated with network failure events. Additionally, or alternatively, processing circuitry 132 of NMS 130 may train machine learning model 135 to identify one or more patterns is the training data 138 associated with sets of training network data labeled as being associated with healthy network operation.

Processing circuitry 132 of NMS 130 may apply machine learning model 135 to detect a network failure based on network data received from a plurality of network devices 122 of an internal network (804). In some examples, at block 806, processing circuitry 132 may perform the techniques of blocks 702 and 704 of the example operation of FIG. 7, but this is not required. Processing circuitry 132 of NMS 130 may apply machine learning model 135 to detect a network failure based on network data received from network devices 122 using one or more other techniques. Processing circuitry 132 of NMS 130 may receive information indicating whether the detection of the network failure by machine learning model 135 is accurate (806). Processing circuitry 132 of NMS 130 may train, with the network data and the information indicating whether the detection on the network failure by the machine learning model 135 is accurate, the machine learning model 135 (808).

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively, or additionally, if implemented in software or firmware, the techniques may be realized at least in part by a computer-readable data storage medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium such as RAM, ROM, NVRAM, EEPROM, flash memory, magnetic or optical data storage media, and the like. In some examples, an article of manufacture may comprise one or more computer-readable storage media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

The code or instructions may be software and/or firmware executed by processing circuitry including one or more processors, such as one or more DSPs, general purpose microprocessors, ASICs, FPGAs, or other equivalent integrated or discrete logic circuitry. Accordingly, the term "processor," as used herein may refer to any of the foregoing structure or any other structure suitable for implementation of the techniques described herein. In addition, in some respects, functionality described in this disclosure may be provided within software modules or hardware modules.

Thus, from one perspective, there has/have now been described a network management system for detecting network failure using a machine learning model including a memory configured to store a machine learning model and processing circuitry in communication with the memory. The processing circuitry is configured to receive network data from a plurality of network devices of an internal network managed by the network management system. The internal network may be connected to an external network isolated from the network management system. Additionally, the processing circuitry is configured apply the machine learning model to detect, based on the network data, a network failure within the external network and perform a corrective action to remediate the network failure within the external network.

Further examples of feature combinations taught by the present disclosure are set out in the following numbered clauses:
1. A network management system comprising:
   a memory configured to store a machine learning model; and
   processing circuitry in communication with the memory and configured to:
      receive network data from a plurality of network devices of an internal network managed by the network management system, wherein the internal network is connected to an external network isolated from the network management system;
      apply the machine learning model to detect, based on the network data, a network failure within the external network; and
      perform a corrective action to remediate the network failure within the external network.
2. The network management system of clause 1,
   wherein the external network comprises a plurality of external network devices and an edge device connecting the plurality of external network devices to the internal network, and
   wherein, to detect the network failure, the processing circuitry is configured to apply the machine learning model to detect a failure of a link between the edge device and one of the plurality of external network devices.
3. The network management system of any preceding clause,
   wherein the external network comprises a plurality of external network devices and an edge device connecting the plurality of external network devices to the internal network, and
   wherein, to detect the network failure, the processing circuitry is configured to apply the machine learning model to detect a failure of one of the plurality of external network devices.
4. The network management system of any preceding clause,
   wherein the external network comprises a first external network,
   wherein, to detect the network failure, the processing circuitry is configured to apply the machine learning model to detect blackholing of network traffic by a first edge device of the first external network, and
   wherein, to perform the corrective action, the processing circuitry is configured to control the plurality of network devices to forward network traffic to a second edge device of a second external network and not the first edge device of the first external network, wherein the second external network is isolated from the network management system and separate from the first external network.
5. The network management system of any preceding clause,
   wherein the external network comprises a plurality of external network devices, a first edge device, and a second edge device, the first edge device and the second edge device connecting the plurality of external network devices to the internal network,
   wherein, to detect the network failure, the processing circuitry is configured to apply the machine learning model to detect blackholing of network traffic by the first edge device, and
   wherein, to perform the corrective action, the network management system is configured to control the plurality of network devices to forward network traffic to the second edge device and not the first edge device.
6. The network management system of any preceding clause, wherein the network data comprises at least one of
   network traffic transmission (Tₓ) data indicating an amount of network traffic transmitted from each network device of the plurality of network devices;
   network traffic reception (Rₓ) data indicating an amount of network traffic received by each network device of the plurality of network devices;
   transmission control protocol (TCP) data indicating (1) an amount of TCP SYN messages transmitted by each network device of the plurality of network devices, (2) an amount of TCP SYN-ACK messages received by each network device of the plurality of network devices, or (3) an amount of TCP Reset messages received by each network device of the plurality of network devices; or
   new session data indicating a number of new sessions that failed to establish between the one or more service provider devices and the one or more client devices via the network device.
7. The network management system of clause 6, wherein to apply the machine learning model to detect the network failure, the processing circuitry is configured to perform any one or more of:
   identify a trend in the Tₓ data and the Rₓ data of the plurality of sets of network parameters indicating high levels of transmitted network traffic transmitted to a device of the external network and low levels of network traffic received from the device of the external network;
   identify a trend in the TCP data indicating high levels of TCP SYN messages transmitted to the device of the external network and low levels of TCP SYN-ACK messages received from the device of the external network; and
   identify a trend in the new session data indicating a high number of new sessions that failed to establish with the device of the external network.
8. The network management system of any preceding clause,
   wherein to apply the machine learning model to detect the network failure within the external network, the processing circuitry is configured to apply the machine learning model to predict, based on the network data, a network failure within the external network likely to occur at a future time; and
   wherein the processing circuitry is configured to perform the corrective action to remediate the predicted network failure prior to the occurrence of the predicted network failure.
9. The network management system of any preceding clause,
   wherein the memory is configured to store training data, wherein the training data comprises a plurality of sets of training data, each of the plurality of sets of training data labeled with information indicating whether the set of training data is associated with one or more network failures, and
   wherein the processing circuitry is configured to train, with the training data, the machine learning model to detect the one or more network failures associated with respective sets of the plurality of sets of training data.
10. The network management system of any preceding clause, wherein the processing circuitry is further configured to:
   receive information indicating whether the detection of the network failure by the machine learning model is accurate;
   train, with the network data and the information indicating whether the detection of the network failure by the machine learning model is accurate, the machine learning model.
11. The network management system of any preceding clause, wherein the internal network is a Software-Defined Wide Area Network (SD-WAN), and wherein the external network comprises one or more of a customer network, an internet services provider network, or a cloud services provider network connected to the SD-WAN.
12. The network management system of any preceding clause, wherein to perform the corrective action to remediate the network failure within the external network, the processing circuitry is configured to perform one or more of:
   control the plurality of network devices to avoid the forwarding of network traffic to an address associated with the network failure;
   withdraw a route to an address associated with the network failure; and
   send a diagnostic message to an address associated with the network failure to confirm the network failure within the external network.
13. A method comprising:
   receiving, by processing circuitry of a network management system, network data from a plurality of network devices of an internal network managed by the network management system, wherein the internal network is connected to an external network isolated from the network management system, and wherein the processing circuitry is in communication with a memory of the network management system configured to store a machine learning model;
   applying, by the processing circuitry, the machine learning model to detect, based on the network data, a network failure within the external network; and
   performing, by the processing circuitry, a corrective action to remediate the network failure within the external network.
14. The method of clause 13,
   wherein the external network comprises a plurality of external network devices and an edge device connecting the plurality of external network devices to the internal network, and
   wherein detecting the network failure comprises applying, by the processing circuitry the machine learning model to detect a failure of a link between the edge device and one of the plurality of external network devices.
15. The method of clause 13 or clause 14,
   wherein the external network comprises a plurality of external network devices and an edge device connecting the plurality of external network devices to the internal network, and
   wherein detecting the network failure comprises applying, by the processing circuitry, the machine learning model to detect a failure of one of the plurality of external network devices.
16. The method of any of clauses 13-15,
   wherein the external network comprises a first external network,
   wherein detecting the network failure comprises applying, by the processing circuitry the machine learning model to detect blackholing of network traffic by a first edge device of the first external network, and
   wherein performing the corrective action comprises controlling, by the processing circuitry, the plurality of network devices to forward network traffic to a second edge device of a second external network and not the first edge device of the first external network, wherein the second external network is isolated from the network management system and separate from the first external network.
17. The method of clause 16, wherein the network data comprises at least one of
   network traffic transmission (Tₓ) data indicating an amount of network traffic transmitted from each network device of the plurality of network devices;
   network traffic reception (Rₓ) data indicating an amount of network traffic received by each network device of the plurality of network devices;
   transmission control protocol (TCP) data indicating (1) an amount of TCP SYN messages transmitted by each network device of the plurality of network devices, (2) an amount of TCP SYN-ACK messages received by each network device of the plurality of network devices, or (3) an amount of TCP Reset messages received by each network device of the plurality of network devices; or
   new session data indicating a number of new sessions that failed to establish between the one or more service provider devices and the one or more client devices via the network device.
18. The method of any of clauses 13-17,
   wherein the memory is configured to store training data, wherein the training data comprises a plurality of sets of training data, each of the plurality of sets of training data labeled with information indicating whether the set of training data is associated with one or more network failures, and
   wherein the method further comprises training, with the training data, the machine learning model to detect the one or more network failures associated with respective sets of the plurality of sets of training data.
19. The method of any of clauses 13-18, wherein the internal network is a Software-Defined Wide Area Network (SD-WAN), and wherein the external network comprises one or more of a customer network, an internet services provider network, or a cloud services provider network connected to the SD-WAN.
20. A computer-readable medium comprising instructions that, when executed by processing circuitry, causes the processing circuitry to:
   receive network data from a plurality of network devices of an internal network managed by a network management system, wherein the internal network is connected to an external network isolated from the network management system;
   apply a machine learning model to detect, based on the network data, a network failure within the external network; and
   apply a corrective action to remediate the network failure within the external network.

## Claims

1. A network management system comprising:
a memory configured to store a machine learning model; and
processing circuitry in communication with the memory and configured to:
receive network data from a plurality of network devices of an internal network managed by the network management system, wherein the internal network is connected to an external network isolated from the network management system;
apply the machine learning model to detect, based on the network data, a network failure within the external network; and
perform a corrective action to remediate the network failure within the external network.

2. The network management system of claim 1,
wherein the external network comprises a plurality of external network devices and an edge device connecting the plurality of external network devices to the internal network, and
wherein, to detect the network failure, the processing circuitry is configured to apply the machine learning model to detect a failure of a link between the edge device and one of the plurality of external network devices.

3. The network management system of any of claims 1-2,
wherein the external network comprises a plurality of external network devices and an edge device connecting the plurality of external network devices to the internal network, and
wherein, to detect the network failure, the processing circuitry is configured to apply the machine learning model to detect a failure of one of the plurality of external network devices.

4. The network management system of any of claims 1-3,
wherein the external network comprises a first external network,
wherein, to detect the network failure, the processing circuitry is configured to apply the machine learning model to detect blackholing of network traffic by a first edge device of the first external network, and
wherein, to perform the corrective action, the processing circuitry is configured to control the plurality of network devices to forward network traffic to a second edge device of a second external network and not the first edge device of the first external network, wherein the second external network is isolated from the network management system and separate from the first external network.

5. The network management system of any of claims 1-4,
wherein the external network comprises a plurality of external network devices, a first edge device, and a second edge device, the first edge device and the second edge device connecting the plurality of external network devices to the internal network,
wherein, to detect the network failure, the processing circuitry is configured to apply the machine learning model to detect blackholing of network traffic by the first edge device, and
wherein, to perform the corrective action, the network management system is configured to control the plurality of network devices to forward network traffic to the second edge device and not the first edge device.

6. The network management system of any of claims 1-5, wherein the network data comprises at least one of
network traffic transmission (Tₓ) data indicating an amount of network traffic transmitted from each network device of the plurality of network devices;
network traffic reception (Rₓ) data indicating an amount of network traffic received by each network device of the plurality of network devices;
transmission control protocol (TCP) data indicating (1) an amount of TCP SYN messages transmitted by each network device of the plurality of network devices, (2) an amount of TCP SYN-ACK messages received by each network device of the plurality of network devices, or (3) an amount of TCP Reset messages received by each network device of the plurality of network devices; or
new session data indicating a number of new sessions that failed to establish between the one or more service provider devices and the one or more client devices via the network device.

7. The network management system of claim 6, wherein to apply the machine learning model to detect the network failure, the processing circuitry is configured to perform any one or more of:
identify a trend in the Tₓ data and the Rₓ data of the plurality of sets of network parameters indicating high levels of transmitted network traffic transmitted to a device of the external network and low levels of network traffic received from the device of the external network;
identify a trend in the TCP data indicating high levels of TCP SYN messages transmitted to the device of the external network and low levels of TCP SYN-ACK messages received from the device of the external network; and
identify a trend in the new session data indicating a high number of new sessions that failed to establish with the device of the external network.

8. The network management system of any of claims 1-7,
wherein to apply the machine learning model to detect the network failure within the external network, the processing circuitry is configured to apply the machine learning model to predict, based on the network data, a network failure within the external network likely to occur at a future time; and
wherein the processing circuitry is configured to perform the corrective action to remediate the predicted network failure prior to the occurrence of the predicted network failure.

9. The network management system of any of claims 1-8,
wherein the memory is configured to store training data, wherein the training data comprises a plurality of sets of training data, each of the plurality of sets of training data labeled with information indicating whether the set of training data is associated with one or more network failures, and
wherein the processing circuitry is configured to train, with the training data, the machine learning model to detect the one or more network failures associated with respective sets of the plurality of sets of training data.

10. The network management system of any of claims 1-9, wherein the processing circuitry is further configured to:
receive information indicating whether the detection of the network failure by the machine learning model is accurate;
train, with the network data and the information indicating whether the detection of the network failure by the machine learning model is accurate, the machine learning model.

11. The network management system of any of claims 1-10, wherein the internal network is a Software-Defined Wide Area Network (SD-WAN), and wherein the external network comprises one or more of a customer network, an internet services provider network, or a cloud services provider network connected to the SD-WAN.

12. The network management system of any of claims 1-11, wherein to perform the corrective action to remediate the network failure within the external network, the processing circuitry is configured to perform one or more of:
control the plurality of network devices to avoid the forwarding of network traffic to an address associated with the network failure;
withdraw a route to an address associated with the network failure; and
send a diagnostic message to an address associated with the network failure to confirm the network failure within the external network.

13. A method comprising:
receiving, by processing circuitry of a network management system, network data from a plurality of network devices of an internal network managed by the network management system, wherein the internal network is connected to an external network isolated from the network management system, and wherein the processing circuitry is in communication with a memory of the network management system configured to store a machine learning model;
applying, by the processing circuitry, the machine learning model to detect, based on the network data, a network failure within the external network; and
performing, by the processing circuitry, a corrective action to remediate the network failure within the external network.

14. The method of claim 13,
wherein the external network comprises a plurality of external network devices and an edge device connecting the plurality of external network devices to the internal network, and
wherein detecting the network failure comprises applying, by the processing circuitry the machine learning model to detect a failure of a link between the edge device and one of the plurality of external network devices.

15. A computer-readable medium comprising instructions that, when executed by processing circuitry, causes the processing circuitry to:
receive network data from a plurality of network devices of an internal network managed by a network management system, wherein the internal network is connected to an external network isolated from the network management system;
apply a machine learning model to detect, based on the network data, a network failure within the external network; and
apply a corrective action to remediate the network failure within the external network.
